# EUROPEAN PATENT SPECIFICATION

(11) **EP 2 390 406 B1**
(45) Date of publication and mention of the grant of the patent: **03.04.2013**
(21) Application number: 11167633.4
(22) Date of filing: 26.05.2011
(51) Int. Cl.: D06P 5/30, D06P 1/44, D06P 1/52, C09D 11/00

(54) **Ink set and textile printing method**
Tintensatz and Textildruckverfahren
Jeu d'encres et procédé d'impression sur tissu

(30) Priority: 28.05.2010 JP 2010122406; 28.05.2010 JP 2010122407; 25.02.2011 JP 2011039520
(43) Date of publication of application: 30.11.2011
(73) Proprietor: Seiko Epson Corporation, Tokyo 163-0811 (JP)
(72) Inventor: Yatake, Masahiro, Nagano, 392-8502 (JP); Nagase, Makoto, Nagano, 392-8502 (JP)
(74) Representative: HOFFMANN EITLE

(56) References cited:
- EP-A1- 2 077 351
- WO-A1-2007/088724
- WO-A1-2009/143433

## Description

### BACKGROUND

### 1. Technical Field

The present invention relates to an ink set which can be used to obtain a printed textile having high color developability and little bleeding and a textile printing method.

### 2. Related Art

Unlike screen textile printing and other textile printing methods used hitherto, ink jet textile printing has an advantage in that operations such as manufacturing, storing and cleaning of a plate are not necessary and that an image with superior gradation properties can be formed on demand. Compared to screen textile printing and other textile printing methods used hitherto, a fabric printing method according to the ink jet method is superior in that it is suitable to low-volume multi-product production, reduces the burden of waste liquid disposal, and can shorten the delivery period, and the like.

In a case of printing performed by the ink jet method, ink viscosity is usually as low as approximately 10 mPa·s or less due to a problem of a discharge property, and, ink is not sufficiently rapidly absorbed into a fabric nor fixed; therefore, in order to prevent bleeding of a printed textile after printing, the fabric is generally subjected to a pretreatment before printing. For example, there is disclosed a fabric for ink jet dyeing which enables a sharp and clear printed image to be obtained by adding a certain amount of a water-soluble polymer, water soluble salts or water-insoluble inorganic particles, which are substantially undyeable to the fabric to be dyed, and serve as a pretreatment agent (see JP-B-63-31594, for example). Furthermore, regarding an ink jet textile printing method of printing a high-temperature reactive dye ink on a cellulose-based fiber structure, there is disclosed an ink jet textile printing method which enables dark colors to be clearly dyed without bleeding by pretreating the cellulose-based fiber structure with an alkaline material, urea, and a nonionic or ionic water-soluble polymer material in advance (see JP-B-4-35351, for example).

Although the advantage of any of the above methods is to prevent bleeding of the image and obtain a clear printed textile with a high density, the methods have not attained color density and clearness equivalent to those of the printed textile obtained by the screen textile printing method used hitherto. Moreover, in the above pretreatments, the pretreatment agent is applied to the fabric by means such as dipping and coating; however, since there is a tendency for bleeding to further increase according to the recent increase in printing speed, it is required that a pretreatment prescription aimed at the prevention of bleeding is further improved.

Meanwhile, there are disclosed various methods and techniques to prevent bleeding in fabric printing. For example, there is disclosed a method of preventing bleeding by using an interaction between components in ink and other components generated by the pretreatment performed on the fabric (see JP-A-60-81379 and JP-A-2003-55886, for example).

This method has problems in that the number of processes increases since a special pretreatment needs to be performed on the fabric, new components (a gelation paste, for example) or the like need to be added to the ink, and storage stability of the ink deteriorates accordingly, or the like.

In addition, there is disclosed a technique in which liquid other than the ink is prepared to use the interaction between the ink and the liquid (see JP-A-2002-19263, for example). In this method, it is not necessary to pretreat the fabric; however, the method is not practical since a sufficient bleeding prevention effect cannot be obtained and the storage stability of ink deteriorates.

Therefore, development of an ink jet textile printing method by which a printed textile with a high color developability and little bleeding can be obtained is required.

### SUMMARY

An advantage of some aspects of the invention is to provide a pretreatment liquid which allows the production of a printed textile with a high color developability and little bleeding of ink. Also provided are an ink set including the same, and a textile printing method and a printed textile using the pretreatment liquid and the ink set.

The above advantage can be achieved by the following aspects and applications.

### Aspect 1

A pretreatment liquid for use on a fabric prior to printing with ink on the fabric, the pretreatment liquid including water, polyvalent metal ions and first fine polymer particles, wherein the first fine polymer particles are crosslinkable polyurethane and/or crosslinkable polyurethane-polyurea, the particles having a glass transition temperature of -10°C or lower and a particle diameter as determined by a light scattering method of 30 nm to 5 µm, wherein the first fine polymer particles have a tetrahydrofuran (THF) insoluble portion of 40% by mass or more at 25 °C.

### Aspect 2

The pretreatment liquid according to Aspect 1, which is for use prior to ink jet textile printing.

### Aspect 3

An ink set including an ink and a pretreatment liquid which is the pretreatment liquid according to any of Aspects 1 or 2; wherein the ink includes second fine polymer particles which are crosslinkable polyurethane and/or crosslinkable polyurethane-polyurea.

### Aspect 4

The ink set according to Aspect 3, which is for use in ink jet textile printing.

### Aspect 5

A textile printing method comprising: applying the pretreatment liquid according to any of Aspects 1 or 2 to a fabric, and subsequently printing on the fabric.

### Aspect 6

A textile printing method comprising: applying the pretreatment liquid according to Aspect 1 or 2 a fabric and subsequently printing on the fabric using the ink of the ink set of Aspect 4.

### Aspect 7

The textile printing method according to Aspect 5 or Aspect 6, wherein the fabric is cotton, hemp, rayon fibers, acetate fibers, silk, nylon fibers or polyester fibers, or, a blended fabric including two or more kinds thereof.

That is, the pretreatment liquid according to an the invention includes water, polyvalent metal ions and fine polymer particles, wherein the fine polymer particles are crosslinkable polyurethane and/or crosslinkable polyurethane-polyurea and have a glass transition temperature of -10°C or lower and a particle diameter as determined by a light scattering method of 30 nm to 5 µm. The first fine polymer particles have a THF insoluble portion of 40% by mass or more at 25°C. Using this pretreatment liquid before ink is printed on the fabric makes it possible to obtain a printed textile with a high color developability and little bleeding of ink.

Furthermore, the ink set according to an aspect of the invention includes the pretreatment liquid and an ink having second fine polymer particles which are crosslinkable polyurethane and/or crosslinkable polyurethane-polyurea. Using this ink set makes it possible to obtain a printed textile with a high color developability and little bleeding of ink.

Moreover, according to the textile printing method according to an aspect of the invention, using a fabric such as cotton, hemp, rayon fibers, acetate fibers, silk, nylon fibers or polyester fibers, or a blended fabric including two or more kinds thereof makes it possible to achieve the above advantages.

### DESCRIPTION OF EXEMPLARY EMBODIMENTS

Hereinafter, embodiments of the invention will be described in detail.

First, an example of the embodiment of the pretreatment liquid according to an aspect of the invention will be described.

### Pretreatment Liquid

The pretreatment liquid in the present example is for use on a fabric prior to printing with ink on the fabric, and the liquid includes water, polyvalent metal ions and fine polymer particles which are crosslinkable polyurethane and/or crosslinkable polyurethane-polyurea and have a glass transition temperature of -10°C or lower and a particle diameter (as determined by a light scattering method) of 30 nm to 5 µm.

The glass transition temperature of the fine polymer particles is -10°C or lower. If the temperature exceeds -10°C, a fixing property to a fabric deteriorates. The glass transition temperature is preferably -15°C or lower, more preferably -20°C or lower. Further, the diameter of the fine polymer particles (as determined by the light scattering method) is preferably 30 nm to 5 µm and more preferably 60 nm to 1 µm. If the particle diameter is less than 30 nm, the fixing property of a printed textile deteriorates, and if it exceeds 5 µm, dispersion stability is reduced. Moreover, in order to inhibit deterioration of the stability of the pretreatment liquid due to the influence of the polyvalent metal ions coexisting with the fine polymer particles in the pretreatment liquid, it is preferable that the particle diameter is 1 µm or less. This may also be useful if the pretreatment liquid is prone to being unstably discharged from the ink jet head when it is printed by the ink jet method. If the diameter exceeds 5 µm, ink is not held in the fabric as well, hence the fixing property deteriorates.

The fine polymer particles are crosslinkable polyurethane and/or crosslinkable polyurethane-polyurea. As a degree of crosslinking of the fine polymer particles, the tetrahydrofuran insoluble portion (remaining amount) is 40% by mass or more at 25°C. When the tetrahydrofuran insoluble portion is 40% by mass or more, the fixing property to a fabric is improved. It is more preferable that the tetrahydrofuran insoluble portion is 60% by mass or more. The tetrahydrofuran insoluble portion herein refers to a ratio (%) of the mass of tetrahydrofuran insoluble portion to the initial mass thereof when the fine polymer particles are dried and then immersed in tetrahydrofuran at 25°C for 24 hours.

Next, a polyol, a chain extender, a polyisocyanate and a polyamine which can be used as a monomer for producing crosslinkable polyurethane and/or crosslinkable polyurethane-polyurea of the fine polymer particles will be described.

### Polyol

Examples of the polyol include compounds containing two or more hydroxyl groups such as linear aliphatic glycols including ethylene glycol, propylene glycol, 1,3-propanediol, 1,3-butanediol, 1,4-butanediol, 1,5-pentanediol, 1,2-pentanediol, 3-methyl-1,5-pentanediol, 1,6-hexanediol, 1,2-hexanediol, diethylene glycol, triethylene glycol, tetraethylene glycol, dipropylene glycol, tripropylene glycol, polyethylene glycol, polypropylene glycol, 1,8-octanediol, 1,2-octanediol, 1,9-nonanediol and the like; aliphatic branched glycols including neopentyl glycol, 3-methyl-1,5-pentanediol, 2-methyl-1,3-propanediol, 2,2-dimethyl-1,3-propanediol, 2-butyl-2-ethyl-1,3-propanediol, 2,2-dibutyl-1,3-propanediol, 2-methyl-1,8-octanediol and the like; alicyclic glycols including 1,4-cyclohexanediol, 1,4-cyclohexanedimethanol and the like; multifunctional glycols including glycerin, trimethylolethane, trimethylolpropane, tributylolpropane, pentaerythritol, sorbitol and the like. These can be used alone or in combination of two or more kinds thereof; also, these can be used as a copolymer of two or more kinds thereof.

In the present example, it is also possible to use a polyester polyol. For example, the polyester polyol can be obtained by a well-known method in which glycols and ethers as well as divalent carboxylic acids and carboxylic anhydrides, which are exemplified below, are subjected to dehydration condensation. Herein, specific compounds used for producing the polyester polyol that can be used in the present example will be exemplified. As saturated or unsaturated glycols, various glycols such as linear aliphatic glycols including ethylene glycol, propylene glycol, 1,3-propanediol, 1,3-butanediol, 1,4-butanediol, 1,5-pentanediol, 1,2-pentanediol, 3-methyl-1,5-pentanediol, 1,6-hexanediol, 1,2-hexanediol, diethylene glycol, triethylene glycol, tetraethylene glycol, dipropylene glycol, tripropylene glycol, polyethylene glycol, polypropylene glycol, 1,8-octanediol, 1,2-octanediol, 1,9-nonanediol and the like; aliphatic branched glycols including neopentyl glycol, 3-methyl-1,5-pentanediol, 2-methyl-1,3-propanediol, 2,2-dimethyl-1,3-propanediol, 2-butyl-2-ethyl-1,3-propanediol, 2,2-dibutyl-1,3-propanediol, 2-methyl-1,8-octanediol and the like; alicyclic glycol including 1,4-dicyclohexanediol, 1,4-cyclohexanedimethanol and the like; a multifunctional glycols including glycerin, trimethylolethane, trimethylolpropane, tributylolpropane, pentaerythritol, sorbitol and the like.

Examples of the ethers include alkyl glycidyl ethers such as n-butyl glycidyl ether, 2-ethylhexyl glycidyl ether and the like; and glycidyl esters of monocarboxylic acids such as glycidyl ester of versatic acids and the like.

Examples of the divalent carboxylic acid and carboxylic anhydride include dibasic acids such as adipic acid, maleic acid, fumaric acid, phthalic anhydride, isophthalic acid, terephthalic acid, succinic acid, oxalic acid, malonic acid, glutaric acid, pimelic acid, azelaic acid, sebacic acid, suberic acid and the like; acid anhydride and dimer acids corresponding thereto; and castor oil and fatty acids thereof. In addition to the polyester polyol obtained through the dehydration condensation by using these, the examples also include polyester polyols obtained through ring-opening polymerization of cyclic ester compounds.

As the polyester polyol that can be used in the present example, for example, poly[3-methyl-1,5-pentanediol]-alt-(adipic acid)] (Kuraray polyol P2010 manufactured by Kuraray Co., Ltd.) obtained by dehydration condensation of 3-methyl-1,5-pentanediol and adipic acid is commercially available.

Furthermore, the polycarbonate polyol that can be used in the present example is produced through reactions such as a methanol-removing condensation reaction of polyhydric alcohol and dimethyl carbonate, a phenol-removing condensation reaction of polyhydric alcohol and diphenyl carbonate, and an ethylene glycol-removing condensation reaction of polyhydric alcohol and ethylene carbonate. Examples of the polyhydric alcohol used in these reactions include various saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, polytetramethylene ether glycol and the like, alicyclic glycols such as 1,4-cyclohexane diglycol, 1,4-cyclohexane dimethanol and the like.

As the polycarbonate polyol that can be used in the present example, for example, a copolymer (PES-EXP815 manufactured by Nippon Polyurethane Industry Co., Ltd.) including 1,6-hexanediol as a main component is commercially available.

Examples of the polycarbonate polyol include those obtained by adding tetrahydrofuran to one or two or more kinds of polyhydric alcohol such as ethylene glycol, diethylene glycol, propylene glycol, dipropylene glycol, glycerin, trimethylolpropane, neopentyl glycol and the like through ring-opening polymerization. These cyclic ethers can be used alone or in combination of two or more kinds thereof; also, it is possible to use a copolymer using two or more kinds of the cyclic ethers. For example, a copolymer (PTXG-1800 manufactured by Asahi Kasei Corporation) of tetrahydrofuran and neopentyl glycol is commercially available.

In addition, as the polyol that can be used in the present example, ACTCOLL EP3033 (manufactured by Mitsui Chemicals, Inc.), PREMINOL 7003 and PREMINOL 7001 (manufactured by Asahi Glass Co., Ltd.), ADEKA POLYETHER AM302 (manufactured by Adeka Corporation) and the like are commercially available.

### Chain Extender

The following chain extenders can be used in the present example. For example, as the polyol, compounds containing two or more hydroxyl groups such as linear aliphatic glycols including ethylene glycol, propylene glycol, 1,3-propanediol, 1,3-butanediol, 1,4-butanediol, 1,5-pentanediol, 1,2-pentanediol, 3-methyl-1,5-pentanediol, 1,6-hexanediol, 1,2-hexanediol, diethylene glycol, triethylene glycol, tetraethylene glycol, dipropylene glycol, tripropylene glycol, polyethylene glycol, polypropylene glycol, 1,8-octanediol, 1,2-octanediol, 1,9-nonanediol and the like; aliphatic branched glycols including neopentyl glycol, 3-methyl-1,5-pentanediol, 2-methyl-1,3-propanediol, 2,2-dimethyl-1,3-propanediol, 2-butyl-2-ethyl-1,3-propanediol, 2,2-dibutyl-1,3-propanediol, 2-methyl-1,8-octanediol and the like; alicyclic glycols including 1,4-cyclohexanediol, 1,4-cyclohexanedimethanol and the like; multifunctional glycols including glycerin, trimethylolethane, trimethylolpropane, tributylolpropane, pentaerythritol, sorbitol and the like can be used. These can be used alone or in combination of two or more kinds thereof; also, these can be used as a copolymer of two or more kinds thereof.

### Polyisocyanate

The polyisocyanate that can be used in the present example preferably contains the following compounds having two or more isocyanate groups. For example, diethylene diisocyanate, tetramethylene diisocyanate, hexamethylene diisocyanate, trimethyl hexamethylene diisocyanate, cyclohexane diisocyanate, 1,3-bis(isocyanatomethyl)cyclohexane, isophorone diisocyanate, 2,6-bis(isocyanatomethyl)decahydronaphthalene, lysine triisocyanate, 2,4-tolylene diisocyanate, 2,6-tolylene diisocyanate, o-tolidine diisocyanate, 4,4'-diphenylmethane diisocyanate, diphenylether diisocyanate, 3-(2'-isocyanatocyclohexyl)propyl isocyanate, tris(phenylisocyanate)thiophosphate, isopropylidene bis(cyclohexyl isocyanate), 2,2'-bis(4-isocyanatomethyl)propane, triphenylmethane triisocyanate, bis(diisocyanatotolyl)phenylmethane, 4,4',4"-triisocyanato-2,5-dimethoxyphenylamine, 3,3'-dimethoxybenzidine-4,4'-diisocyanate, 1,3-phenylene diisocyanate, 1,4-phenylene diisocyanate, 4,4'-diisocyanatobiphenyl, 4,4'-diisocyanato-3,3'-dimethylbiphenyl, dicyclohexylmethane-4,4'-diisocyanate, 1,1'-methylenebis(4-isocyanatobenzene), 1,1'-methylenebis(3-methyl-4-isocyanatobenzene), m-xylylene diisocyanate, p-xylylene diisocyanate, 1,3-bis(1-isocyanate-1-methylethyl)benzene, 1,4-bis(1-isocyanate-1-methylethyl)benzene, 1,3-bis((2-isocyanato-2-propyl)benzene, 2,6-bis(isocyanatomethyl)tetrahydrodicyclopentadiene, bis(isocyanatomethyl)dicyclopentadiene, bis(isocyanatomethyl)tetrahydrothiophene, bis(isocyanatomethyl)thiophene, 2,5-diisocyanatomethylnorbornene, bis(isocyanatomethyl)adamantine, 3,4-diisocyanatoselenophane, 2,6-diisocyanate-9-selenabicyclononane, bis(isocyanatomethyl)selenophane, 3,4-diisocyanate-2,5-diselenorane, dimer acid diisocyanate, 1,3,5-tri(1-isocyanatohexyl)isocyanurate, 2,5-diisocyanatomethyl-1,4-dithiane, 2,5-bis(diisocyanatometyl-4-isocyanate-2-thiabutyl)-1,4-dithiane, 2,5-bis(3-isocyanate-2-thiapropyl)1,4-dithiane, 1,3,5-triisocyanatocyclohexane, 1,3,5-tris(isocyanatomethyl)cyclohexane, bis(isocyanatomethylthio)methane, 1,5-diisocyanate-2-isocyanatomethyl-3-thiapentane, 1,2,3-tris(isocyanatoethylthio)propane, 1,2,3-(isocyanatomethylthio)propane, 1,1,6,6-tetrakis(isocyanatomethyl)-2,5-dithiahexane, 1,1,5,5-tetrakis(isocyanatomethyl)-2,4-dithiapentane, 1,2-bis(isocyanatomethylthio)ethane, 1,5-diisocyanate-3-isocyanatomethyl-2,4-ditiapentane and the like can be used. A dimer of these polyisocyanates obtained by a burette-type reaction, a cyclization trimer of these polyisocyanates, an alcohol or thiol adduct of these polyisocyanates and the like can be used, for example. Moreover, a compound obtained by changing a part of or the whole isocyanate group of the polyisocyanates to an isothiocyanate group can be used, for example. These compounds can be used alone or in a mixture of two or more kinds thereof.

### Polyamine

The polyamine that can be used in the present example is a compound including two or more primary or secondary amino groups, and examples thereof include hydrazine, ethylenediamine, ethylenetriamine, triethylenetetramine, hexamethylenediamine, xylylenediamine, metaphenylenediamine, piperazine, maleic hydrazide and the like.

It is preferable that the crosslinkable polyurethane and/or crosslinkable polyurethane-polyurea are/is included at 70% by mass (hereinafter, simply represented as "%" unless otherwise specified) or more based on the entirety of the fine polymer particles, since the friction fastness and dry cleaning properties of the printed textile in both dry friction and wet friction are further improved.

As acids that can be used for the crosslinkable polyurethane and/or crosslinkable polyurethane-polyurea, organic compounds including sulfonic acid, sulfamic acid, silicic acid, metasilicic acid, phosphoric acid, metaphosphoric acid, boric acid, thiosulfuric acid or the like are preferable. Furthermore, acids having a carboxyl group are not preferable since they coagulate due to polyvalent metal ions.

The pretreatment liquid in the present example includes polyvalent metal ions. As the polyvalent metal ions, for example, divalent or higher valency metal cations such as magnesium, calcium, strontium, barium, zirconium, aluminum and the like are preferable. Moreover, it is preferable that the pretreatment liquid in the present example includes water-soluble metal salts formed of the metal cations and anions such as a fluoride ion (F⁻), a chloride ion (Cl⁻), a bromide ion (Br⁻), a sulfuric acid ion (SO₄²⁻), a nitric acid ion (NO₃⁻), an acetic acid ion (CH₃COO⁻) and the like.

These polyvalent metal ions have an effect of coagulating ink by acting on the surface of a pigment in the ink used together with the pretreatment liquid of the present example and on the carboxyl group of the fine polymer particles included in a dispersion polymer or the ink. As a result, the ink is inhibited from penetrating into a fabric, and the ink remains on the surface of the fabric accordingly; therefore, an effect of improving color developability is achieved. Accordingly, it is necessary that any one of the surface of the pigment in the ink and the fine polymer particles included in the dispersion polymer or the ink has a carboxyl group.

The pretreatment liquid in the present example can include a water-soluble organic solvent, and examples thereof include polyhydric alcohols (such as ethylene glycol, glycerin, 2-ethyl-2-(hydroxymethyl)-1,3-propanediol, tetraethylene glycol, triethylene glycol, tripropylene glycol, 1,2,4-butanetriol, diethylene glycol, propylene glycol, dipropylene glycol, butylene glycol, 1,6-hexanediol, 1,2-hexanediol, 1,5-pentanediol, 1,2-pentanediol, 2,2-dimethyl-1,3-propanediol, 2-methyl-2,4-pentanediol, 3-methyl-1,5-pentanediol, 3-methyl-1,3-butanediol, 2-methyl-1,3-propanediol and the like), amines (such as ethanolamine, 2-(dimethylamino)ethanol and the like), monohydric alcohols (such as methanol, ethanol, butanol and the like), alkyl ethers of polyhydric alcohols (such as diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, dipropylene glycol monomethyl ether and the like), 2,2'-thiodiethanol, amines (such as N,N-dimethylformamide and the like), heterocycles (2-pyrrolidone, N-methyl-2-pyrrolidone and the like) or acetonitrile.

### Ink

Next, an ink composition for an ink jet suitable for the pretreatment liquid according to the present example and for the ink jet textile printing method and the printed textile using the liquid will be described. It is preferable that the pigment as a coloring material in the ink composition for the ink jet textile printing used in the present example is a self-dispersion type or is dispersed by an acrylic resin. Particularly, in a case of a black ink, the color developability is improved by employing a self-dispersion type of pigment with the use of surface-oxidized carbon black. In a case of a color ink, the color developability and the stability are improved by dispersing organic pigments with the acrylic resin. Herein, the acrylic resin refers to a resin including a monomer having a (meth)acryloyl group such as acrylate, methacrylate or the like as a main component, and other vinyl monomers such as styrene or the like may be used.

### Pigment Dispersion

The average particle diameter of a pigment dispersion that can be used in the present example is measured by the light scattering method. It is preferable that the average particle diameter of the pigment dispersion is 50 nm to 1 µm. If the average particle diameter is less than 50 nm, the color developability of a printed textile deteriorates; also, if the average particle diameter exceeds 1 µm, the fixing property deteriorates. In the case of black and color pigment, the average particle diameter is more preferably 70 nm to 230 nm, and still more preferably 80 nm to 130 nm.

In a case of a white pigment, the average particle diameter is preferably 100 nm to 600 nm, and more preferably 200 nm to 500 nm. If the average particle diameter is less than 100 nm, a covering property deteriorates, so the white color developability deteriorates. If the average particle diameter exceeds 1 µm, the fixing property deteriorates, and discharge stability from an ink jet head deteriorates.

It is preferable that the pigment dispersion according to the present example includes self-dispersion carbon black which can be dispersed in water without a dispersant and has an average particle diameter of form 50 nm to 300 nm. By using the self-dispersion carbon black, the color developability of the printed textile is improved. As a method which enables dispersion in water without a dispersant, for example, there is a method of oxidizing the surface of carbon black by using ozone, sodium hypochlorite or the like. The average particle diameter of the self-dispersion carbon black dispersion is preferably 50 nm to 150 nm. If the particle diameter is less than 50 nm, it is difficult to obtain the color developability; also, if it exceeds 150 nm, the fixing property deteriorates. The particle diameter is more preferably 70 nm to 130 nm, still more preferably 80 nm to 120 nm.

It is preferable that the pigment dispersion according to the present example can disperse organic pigments in water by using a polymer, has an average particle diameter of 50 nm to 300 nm, and includes the polymer, which is used for the dispersion, having a mass average molecular weight in terms of styrene by gel permeation chromatography (GPC) of 10000 to 200000. In this configuration, the fixing property of the pigment of the printed textile improves, and the storage stability of the pigment ink itself also improves. That is, due to the properties of the vehicle used in producing the ink composition, the polymer used for dispersion is prone to being eliminated and to exerting a negative influence. In detail, due to the presence of additives for improving printing quality (such as surfactants based on each of acetylene glycol, acetylene alcohol and silicon; di(tri)ethylene glycol monobutyl ether; dipropylene glycol monobutyl ether; 1,2-alkylene glycol; or a mixture thereof and the eliminated polymer used for dispersion) the adhesive which constitutes the head is prone to being attacked. If the mass average molecular weight exceeds 200000, ink viscosity is prone to increase, and it is difficult to obtain a stable dispersion.

As the polymer used for the dispersion, it is possible to use polymers using monomers and oligomers having an acryloyl group, a methacryloyl group, a vinyl group or an allyl group, which has a double bond.

In order to impart hydrophilicity and to improve color developability by coagulation action of the polyvalent metal ions, it is preferable that the polymer used for the dispersion includes a carboxyl group. The carboxyl group may e.g. be derived from the following monomer types: acrylic acid, methacrylic acid, crotonic acid, propylacrylic acid, isopropylacrylic acid, itaconic acid, fumaric acid and the like. These acids can be used alone or in combination of two or more kinds thereof; however, acrylic acid and/or methacrylic acid is preferable.

It is preferable that the polymer used for the dispersion is a copolymer of a monomer composition with a ratio of 80% or more based on the total monomer mass of acrylate and acrylic acid. If the ratio is less than 80%, the fixing property of the ink to the printed textile deteriorates. As the acrylate, it is possible to use commercially available acrylates such as methyl acrylate, ethyl acrylate, propyl acrylate, butyl acrylate, hexyl acrylate, cyclohexyl acrylate, octyl acrylate, lauryl acrylate, 2-ethyl hexyl acrylate, 2-ethyl hexyl carbitol acrylate, EO-modified phenol acrylate, N-vinylpyrrolidone, isoboronyl acrylate, benzyl acrylate, EO-modified paracumyl phenol acrylate, 2-hydroxyethyl-3-phenoxypropyl acrylate and the like. Preferably, benzyl acrylate and/or butyl acrylate are/is used. More preferably, a copolymer of a monomer including 40% to 80% of benzyl acrylate based on the total monomer mass is used. If the total amount of the acrylic monomer and the methacrylic monomer which include a benzyl group is less than 40%, the color developability of the printed textile on a fabric deteriorates, if it exceeds 80%, it is difficult to obtain the dispersion stability. Furthermore, as the water-dispersible polymer including benzyl groups, monomers other than benzyl acrylate and benzyl methacrylate are preferably acrylic acid and/or methacrylic acid and other acrylates and/or methacrylate.

The polymer used for the dispersion can be obtained by well-known methods such as solution polymerization and emulsion polymerization. Furthermore, in addition to the polymer used for the dispersion, it is also possible to add a water-dispersible or water-soluble polymer and a surfactant as a dispersion stabilizer to stably disperse the pigment dispersion in the ink.

As the pigment included in the ink used in the present example, carbon blacks (C.I. pigment black 7) such as furnace black, lamp black, acetylene black, channel black and the like are particularly preferable for a black ink; however, metals such as copper oxide, iron oxide (C.I. pigment black 11), titanium oxide and the like and organic pigments such as aniline black (C.I. pigment black 1) and the like can also be used.

As the pigments for color inks, it is possible to use C.I. pigment yellow 1 (fast yellow G), 3,12 (disazo yellow AAA), 13, 14, 17, 24, 34, 35, 37, 42 (yellow iron oxide), 53, 55, 74, 81, 83 (disazo yellow HR), 93, 94, 95, 97, 98, 100, 101, 104, 108, 109, 110, 117, 120, 128, 138, 153, 155, 180, 185, C.I. pigment red 1, 2, 3, 5, 17, 22 (brilliant fast scarlet), 23, 31, 38, 48:2 (permanent red 2B(Ba)), 48:2 (permanent red 2B(Ca)), 48:3 (permanent red 2B(Sr)), 48:4 (permanent red 2B(Mn)), 49:1, 52:2, 53:1, 57:1 (brilliant carmine 6B), 60:1, 63:1, 63:2, 64:1, 81 (rhodamine 6G lake), 83, 88, 101 (red iron oxide), 104, 105, 106, 108 (cadmium red), 112, 114, 122 (quinacridone magenta), 123, 146, 149, 166, 168, 170, 172, 177, 178, 179, 185, 190, 193, 202, 206, 209, 219, C.I. pigment violet 19, 23, C.I. pigment orange 36, 43, 64, C.I. pigment blue 1, 2, 15 (phthalocyanine blue R), 15:1, 15:2, 15:3 (phthalocyanine blue G), 15:4, 15:6 (phthalocyanine blue E), 16, 17:1, 56, 60, 63, C.I. pigment green 1, 4, 7, 8, 10, 17, 18, 36 and the like.

In this manner, various pigments can be used.

The pigment is dispersed by using a disperser, and as the disperser, various commercially available dispersers can be used. In view of low contamination, non-media dispersion is preferable. Specific examples thereof include a wet jet-mill (manufactured by GENUS), a nanomizer (manufactured by NANOMIZER Inc.), a homogenizer (manufactured by Gaulin), an ultimaizer (manufactured by SUGINO MACHINE LIMITED), a microfluidizer (manufactured by Microfluidics International Corporation) and the like.

The amount of the pigment to be added is preferably 0.5% to 30%, and more preferably 1.0% to 15%. If the amount to be added is 0.5% or less, printing density cannot be secured, and if it is 30% or more, the ink viscosity increases, and structural viscosity occurs in viscosity properties; hence, discharge stability of ink from an ink jet head tends to deteriorate.

### Polymer Particles Contained in Ink

It is preferable that the ink which can be used in this example includes fine polymer particles (hereinafter, the fine polymer particles are referred to as "fine polymer particles contained in ink" so as to be distinguished from fine polymer particles included in the pretreatment liquid). The fine polymer particles contained in ink are used to improve the fixing property of the ink to a fabric. It is preferable that the glass transition temperature of the fine polymer particles contained in the ink is -10°C or lower. This temperature improves the fixing property of pigments of the printed textile. If the temperature exceeds -10°C, the fixing property of pigment gradually deteriorates. The glass transition temperature is preferably -15°C or lower, and more preferably -20°C or lower.

The acid value of the fine polymer particles contained in ink according to the present example is preferably 30 mgKOH/g to 100 mgKOH/g. If the acid value exceeds 100 mgKOH/g, washing fastness of the printed textile deteriorates, and if it is less than 30 mgKOH/g, the stability of the ink deteriorates, so the color developability and the fixing property on a fabric deteriorate. The acid value is preferably 40 mgKOH/g to 80 mgKOH/g.

It is preferable that the fine polymer particles contained in ink have a mass average molecular weight in terms of styrene by gel permeation chromatography (GPC) of 100000 to 1000000. In this range, the fixing property of the pigments of the printed textile improves. Moreover, the average particle diameter of the fine polymer particles contained in ink is measured by the light scattering method. The particle diameter of the fine polymer particles contained in ink, which is measured by the light scattering method, is preferably 30 nm to 500 nm, and more preferably 60nm to 300 nm. If the diameter is less than 30 nm, the fixing property of the printed textile deteriorates, and if it exceeds 500 nm, the dispersion stability is destabilized; also, when a pigment fixing solution is printed by ink jet, discharge from the ink jet head is prone to being destabilized.

As the fine polymer particles contained in ink, the above described crosslinkable polyurethane and/or crosslinkable polyurethane-polyurea are/is preferably used. As a polyol, a chain extender, a polyisocyanate, and polyamine, which can be used as a monomer for producing the crosslinkable polyurethane and/or crosslinkable polyurethane-polyurea, the above described monomers can be used.

As the degree of crosslinking of the fine polymer particles, it is preferable that the tetrahydrofuran insoluble portion (remaining amount) is 40% by mass or more at 25°C. When the tetrahydrofuran insoluble portion is 40% by mass or more, the fixing property to fabric is improved. It is more preferable that the tetrahydrofuran insoluble portion is 60% by mass or more. The tetrahydrofuran insoluble portion herein refers to a ratio (%) of the mass of tetrahydrofuran insoluble portion to the initial mass thereof when the fine polymer particles are dried and then immersed in tetrahydrofuran at 25°C for 24 hours.

It is preferable that the crosslinkable polyurethane and/or crosslinkable polyurethane-polyurea are/is included at 70% by mass (hereinafter, simply represented as "%" unless otherwise specified) or more based on the entirety of the fine polymer particles, since the friction fastness of the printed textile in both the dry friction and wet friction and the dry cleaning properties are further improved.

As the fine polymer particles contained in ink, it is possible to use acrylic resin fine particles. For alkyl (meth)acrylate and/or cyclic alkyl (meth)acrylate included in acrylic resin particles as constituent components, alkyl (meth)acrylate with 1 to 24 carbon atoms and/or cyclic alkyl (meth)acrylate having 3 to 24 carbon atoms are/is preferable. Examples thereof include methyl (meth)acrylate, ethyl (meth)acrylate, propyl (meth)acrylate, n-butyl (meth)acrylate, isobutyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate, t-butylcyclohexyl (meth)acrylate, lauryl (meth)acrylate, isobornyl (meth)acrylate, cetyl (meth)acrylate, stearyl (meth)acrylate, isostearyl (meth)acrylate, tetramethylpiperidyl(meth)acrylate, dicyclopentanyl (meth)acrylate, dicyclopentenyl (meth)acrylate, dicyclopentenyloxy (meth)acrylate, behenyl (meth)acrylate and the like. Furthermore, it is preferable that the alkyl (meth)acrylate and/or cyclic alkyl (meth)acrylate is included at 70% by mass or more based on all of the fine polymer particles contained in ink. The friction fastness and the dry cleaning property of the printed textile in both the dry friction and wet friction are further improved with this configuration.

It is preferable that the acid contained in the fine polymer particles included in ink as a constituent component is an acid having a carboxyl group, in view of reactivity thereof with polyvalent metal ions in the pretreatment liquid in the present example. Examples of the acid having a carboxyl group include unsaturated carboxylic acids such as acrylic acid, methacrylic acid, maleic acid and the like.

### 1,2-Alkylene Glycol

It is preferable that the ink according to the present example contains 1,2-alkylene glycol. By using 1,2-alkylene glycol, bleeding in printed matter or a printed textile decreases, and printing quality improves.
Preferable examples of 1,2-alkylene glycol include 1,2-alkylene glycol having 5 or 6 carbon atoms such as 1,2-hexanediol, 1,2-pentanediol, and 4-methyl-1,2-pentanediol. Among these, 1,2-hexanediol and 4-methyl-1,2-pentanediol having 6 carbon atoms are preferable. The amount of 1,2-alkylene glycol to be added is preferably 0.3% by mass to 30% by mass, more preferably 0.5% by mass to 10% by mass.

### Glycol Ether

It is preferable that the ink according to the present example contains glycol ether. With this configuration, bleeding in the printed matter and the printed textile decreases. As the glycol ether, it is preferable to use one or two or more kinds of the glycol ether selected from diethylene glycol monobutyl ether, triethylene glycol monobutyl ether, propylene glycol monobutyl ether and dipropylene glycol monobutyl ether. Also, the amount of the glycol ether to be added is preferably 0.1% to 20%, and more preferably 0.5% to 10%.

### Acetylene Glycol-based Surfactant and/or Acetylene Alcohol-based Surfactant

It is preferable that the ink according to the present example contains an acetylene glycol-based surfactant and/or an acetylene alcohol-based surfactant. By using the acetylene glycol-based surfactant and/or the acetylene alcohol-based surfactant, bleeding decreases further, and printing quality improves. Adding the surfactants improves a drying property of prints and enables high-speed printing.

As the acetylene glycol-based surfactant and/or the acetylene alcohol-based surfactant, it is preferable to use one or more kinds of the surfactant selected from 2,4,7,9-tetramethyl-5-decyne-4,7-diol and an akylene oxide adduct of 2,4,7,9-tetramethyl-5-decyne-4,7-diol; and 2,4-dimethyl-5-decyne-4-ol and an akylene oxide adduct of 2,4-dimethyl-5-decyne-4-ol. These are available as an Olfin 104 series and an E series such as Olfin E1010 from Air Products and Chemicals, Inc. (United Kingdom) and Surfynol (registered trade mark) 465 or Surfynol 61 from Nissin Chemical Industry Co., Ltd.

In the present example, bleeding decreases by using one or two or more kinds selected from a group consisting of the 1,2-alkylene glycol, the acetylene glycol-based surfactant and/or the acetylene alcohol-based surfactant and the glycol ether.

### Other Components

It is also possible to appropriately add various additives such as a moisturizer, a dissolution aid, a penetration controlling agent, a viscosity adjuster, a pH adjuster, an antioxidant, a preservative, an antifungal agent, a corrosion inhibitor, a chelate for capturing metal ions affecting dispersion or the like to the ink according to the present example, for the purpose of securing leaving stability, stable discharge from an ink jet head, improving clogging, preventing deterioration of ink or the like.

The ink usable in the present example may use a water-soluble organic solvent in addition to the above components as necessary. Examples of the solvent include polyhydric alcohols (such as ethylene glycol, glycerin, 2-ethyl-2-(hydroxymethyl)-1,3-propanediol, tetraethylene glycol, triethylene glycol, tripropylene glycol, 1,2,4-butanetriol, diethylene glycol, propylene glycol, dipropylene glycol, butylene glycol, 1,4-butanediol, 1,2-butanediol, 1,5-pentanediol, 1,6-hexanediol, 1,8-octanediol, 1,2-octanediol, 2,2-dimethyl-1,3-propanediol, 2-methyl-2,4-pentanediol, 3-methyl-1,5-pentanediol, 3-methyl-1,3-butanediol, 2-methyl-1,3-propanediol, 2-butyl-2-ethyl-1,3-propanediol and the like), amines (such as monoethanolamine, diethanolamine, triethanolamine, 2-(dimethylamino)ethanol and the like), monohydric alcohols (such as methanol, ethanol, propanol, butanol and the like), alkyl ethers of polyhydric alcohol (such as diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, dipropylene glycol monomethyl ether and the like), 2,2'-thiodiethanol, amines (such as N,N-dimethylformamide and the like), heterocycles (2-pyrrolidone and the like) or acetonitrile. Preferably, the amount of the water-soluble organic solvent is 1% to 60% by mass based on the total ink mass.

The ink according to the present example may use a surfactant in addition to the above components as necessary, and as the surfactant, any of a cationic, anionic, amphoteric and nonionic surfactant can be used.

Examples of the cationic surfactant include an aliphatic amine salt, an aliphatic quaternary ammonium salt, a benzalkonium salt, benzalkonium chloride, a pyridinium salt, an imidazolinium salt and the like. Examples of the anionic surfactant include a fatty acid soap, an N-acyl-N-methylglycine salt, an N-acyl-N-methyl-β-alanine salt, an N-acylglutamic acid salt, an alkyl ether carbonic acid salt, an acylated peptide, an alkyl sulfonic acid salt, an alkyl benzene sulfonic acid salt, an alkyl naphthalene sulfonic acid salt, a dialkyl sulfosuccinic acid ester salt, an alkyl sulfoacetic acid salt, an α-olefin sulfonic acid salt, N-acyl methyl taurine, sulfated oil, a higher alcohol sulfuric acid ester salt, a secondary higher alcohol sulfuric acid ester salt, an alkyl ether sulfuric acid salt, a secondary higher alcohol ethoxy sulfate, a polyoxyethylene alkylphenyl ether sulfuric acid salt, monoglysulfate, a fatty acid alkylolamide sulfuric acid ester salt, an alkyl ether phosphoric acid ester salt, an alkyl phosphoric acid ester salt and the like. Examples of the amphoteric surfactant include a carboxybetaine type, a sulfobetaine type, an amino carboxylic acid salt, imidazolinium betaine and the like. Examples of the nonionic surfactant include polyoxyethylene alkylphenyl ethers (such as Emulgen 911 manufactured by Kao Corporation), polyoxyethylene sterol ether, polyoxyethylene alkyl ethers, polyoxyethylene secondary alcohol ethers, a polyoxyethylene lanoline derivative, polyoxyethylene polyoxypropylene alkyl ethers (such as Newpol PE-62 manufactured by Sanyo Chemical Industries, Ltd.), polyoxyethylene glycerin fatty acid esters, polyoxyethylene sorbitan fatty acid esters, polyoxyethylene sorbitol fatty acid esters, polyethylene glycol fatty acid esters, fatty acid monoglyceride, polyglycerine fatty acid esters, sorbitan fatty acid esters, polyoxyethylene castor oil, hydrogenated castor oil, propylene glycol fatty acid esters, sucrose fatty acid esters, fatty acid alkanolamides, polyoxyethylene fatty acid amides, polyoxyethylene alkyl amides, alkylamine oxides and the like.

These surfactants can be used alone or in a mixture of two or more kinds thereof. By adding the surfactants in a range from 0.001% to 1.0% by mass based on the total mass of ink, the surface tension of the ink can be arbitrarily adjusted, and thus is preferable.

In the present example, the average particle diameter of the fine polymer particles or of the pigment can be measured by a commercially available particle diameter measuring device which uses the light scattering method. Specific examples of the particle diameter measuring device include an ELS series manufactured by Otsuka Chemical Co., Ltd., a Microtrac series and a Nanotrac series manufactured by Nikkiso Co., Ltd., a Zetasizer series manufactured by Malvern Instruments Ltd., and the like.

### Textile Printing Method

Next, the textile printing method of the present example will be described.

The textile printing method of the present example includes pretreating a fabric by applying the pretreatment liquid to the fabric and printing ink on (the pretreatment liquid-applied surface of) the fabric to which the pretreatment liquid has been applied, after the pretreating. In this method, the pretreatment liquid includes water, polyvalent metal ions and fine polymer particles; and the fine polymer particles are crosslinkable polyurethane and/or crosslinkable polyurethane-polyurea and have a glass transition temperature of -10°C or lower and a particle diameter as determined by a light scattering method of 30 nm to 5 µm.

Furthermore, in the textile printing method of the present example, it is preferable that the fabric is cotton, hemp, rayon fibers, acetate fibers, silk, nylon fibers or polyester fibers, or, a blended fabric including two or more kinds thereof. Among these fabrics, cotton, hemp, the rayon fiber and the acetate fiber are preferable in view of the high color developability, little bleeding and the excellent fixing property. Particularly, cotton is preferable.

As a preferable aspect of the textile printing method which uses the pretreatment liquid of the present example, after the pretreatment is performed on the fabric by using the pretreatment liquid of the present example, an ink containing coloring material is applied to the fabric containing fibers that can be printed, followed at least by a thermal treatment, for example. In this manner, textile printing on the fabric can be completed.

For the thermal treatment, it is preferable that the above printed textile is thermally treated at least at 110°C to 200°C for 1 minute or longer.

In the producing method of the printed textile in the present example, if the heating temperature in the thermal treatment is lower than 110°C, it is difficult to improve the fixing property of the printed textile. Also, if the heating temperature exceeds 200°C, the fabric, pigment and polymers themselves deteriorate. The heating temperature is preferably 120°C to 170°C, and the heating time takes 1 minute or longer. The preferable heating time is 2 minutes or longer.

Materials constituting the fabric used in the textile printing method in the present example are not particularly limited. However, it is preferable to use fabrics including cotton, hemp, rayon fibers, acetate fibers, silk, nylon fibers or polyester fibers, or a blended fabric including two or more kinds thereof, among the materials. Among these, a fabric containing at least cotton fibers is particularly preferable. As the fabric, any one of woven fabric, knitted fabric, unwoven fabric and the like of the above described fibers may be used. Also, as the fabric that can be used in the present example, a blended woven fabric, blended unwoven fabric and the like can also be used as the fabric for textile printing. Furthermore, the thickness of a thread constituting the above described fabrics is preferably in a range from 10 to 100 denier.

In the case of the ink jet textile printing method according to the present example, in order to obtain a uniformly printed textile, it is desirable to wash out impurities such as fat and oil, wax, a pectic substance, residual of chemicals such as a sizing agent used in a fabric producing process or other contaminants, which are attached on the fabric fiber, before the textile printing. Well-known cleaning agents may be used for cleaning, and examples thereof include alkaline agents such as sodium hydroxide, potassium hydroxide, sodium carbonate, and potassium carbonate; and surfactants such as anionic surfactants, nonionic surfactants, cationic surfactant and amphoteric surfactants; or enzymes and the like.

In the textile printing method in the present example, as a method of coating the pretreatment liquid of the present example on the fabric, previously known coating methods such as a spraying method, a coating method, a padding method and the like can be used for coating. It is also possible to use a method in which the pretreatment liquid is coated on the fabric by using an ink jet head. When the pretreatment liquid is coated on the fabric by using the ink jet head, the particle diameter of the fine polymer particles as determined by the light scattering method is preferably 30 nm to 1 µm. If the particle diameter exceeds 1 µm, the discharge stability from the ink jet head tends to deteriorates. The diameter is more preferably 500 nm or less.

When the ink composition is printed (i.e. attached or coated) on the fabric, it is preferable that the ink is discharged by a method in which an electrostrictive element such as a piezoelectric element that does not cause heating is used. In a case of a thermal head that causes heating, the fine polymer particles in the pigment fixing solution or the polymer used for dispersing the pigment in the ink are degenerated so that the ink is prone to being unstably discharged. When it is required that a large amount of ink is discharged over a long time in a process such as the production of printed textile, a head where heating occurs is not preferable.

### Printed Textile

The printed textile in the present example is obtained in the above described textile printing method. Example

Hereinafter, the present example will be described in detail with reference to examples; however, the invention is not limited to the examples but can be modified in various manners as long as the modifications do not depart from the aspect of the present example. Furthermore, "parts" or "%" used throughout the examples represents "parts by mass" or "% by mass" unless otherwise specified.

### Example 1

### Preparation of Pretreatment Liquid 1

### 1. Production of fine polymer particles 1

A reaction container was provided with a dropping device, a thermometer, a water-cooled reflux condenser, a nitrogen-introducing tube, a stirrer, and a heat regulator, and 70 parts of polycarbonate polyol (1,6-hexanediol base, Mw 1000), 26 parts of hexamethylene diisocyanate, and 76 parts of methyl ethyl ketone were added to the reaction container, followed by polymerization at 75°C over 3 hours. A salt solution including 14 parts of methyl ethyl ketone, 4 parts of tetraethylene glycol and 1.2 parts of sodium hydroxide, which was separately prepared in advance, was added to the reaction container, followed by another polymerization at 75°C for 2 hours. This urethane prepolymer solution was cooled to 30°C, and an aqueous solution in which 8 parts by mass of trimethylolpropane was dissolved in 260 parts by mass of water was added dropwise thereto, thereby performing a crosslinking reaction by phase-transfer emulsification. The resultant was stirred for an hour, and a part of the methyl ethyl ketone and the water was removed by distillation at 50°C under reduced pressure, thereby obtaining an aqueous dispersion of crosslinkable polyurethane. The aqueous dispersion of crosslinkable polyurethane was filtered by using a 5.0 µm filter to obtain an aqueous dispersion liquid of fine polymer particles. Concentration adjustment was performed on the aqueous dispersion liquid of fine polymer particles by adding water, thereby producing an emulsion A (EM-A) of 40% solid concentration. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -17°C; also, the particle diameter thereof measured by using a Microtrac particle size distribution measurement device UPA 250 (manufactured by Nikkiso Co., Ltd.) was 120 nm. Furthermore, the amount of remaining tetrahydrofuran in the dried resultant was 62% at 25°C.

### 2. Production of pretreatment liquid 1

EM-A (solid concentration 40%) 25.0%
Calcium chloride 10.5%
Olfin E1010 (an acetylene glycol surfactant manufactured by Nissin Chemical Industry Co., Ltd.) 1.2%
Proxel XLII (manufactured by Arch Chemicals Japan, Inc.) 0.3%
1,2-hexanediol 0.5%
Triethylene glycol 0.5%
Ion-exchange water remaining amount

Each of the above additives was sequentially mixed and stirred, followed by filtration with a 5 µm filter, thereby preparing a pretreatment liquid 1.

### Preparation of Black Ink 1, Cyan Ink 1, Magenta Ink 1, and Yellow Ink 1 for an Ink Jet

### 1. Production of pigment dispersion liquid Bk1 for black ink

For a pigment dispersion liquid 1, Monarch 880, which is a carbon black (C.I pigment black 7), manufactured by Cabot Corporation (US) was used. The surface of the carbon black was oxidized in the same manner as in JP-A-8-3498 so as to be able to be dispersed in water and was adjusted with ion exchange water, thereby obtaining a pigment dispersion liquid Bk1 for black ink with a pigment solid concentration of 15%.

### 2. Production of pigment dispersion liquid C1 for cyan ink

For a dispersion liquid C1 for cyan ink, a C.I. pigment blue 15:4 (a copper phthalocyanine pigment manufactured by Clariant) was used. A reaction container provided with a stirrer, a thermometer, a refluxing tube and a funnel was filled with nitrogen 75 parts of benzyl acrylate, 2 parts of acrylic acid and 0.3 parts of t-dodecyl mercaptan were added thereto, followed by heating at 70°C. While 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were put into the funnel so as to be added dropwise to the reaction container over 4 hours, the dispersion polymer was subjected to the polymerization reaction. Subsequently, methyl ethyl ketone was added to the reaction container, thereby producing a pigment dispersion polymer solution A having 40% concentration. A part of the polymer was taken to be dried, and the glass transition temperature thereof measured thereafter by a differential scanning calorimeter (EXSTAR 6000DSC manufactured by Seiko Instruments Inc.) was 40°C.

Furthermore, 40 parts of the pigment dispersion polymer solution A was mixed with 30 parts of C.I. pigment blue 15:4 (a copper phthalocyanine pigment manufactured by Clariant), 100 parts of 0.1 mol/L of aqueous sodium hydroxide solution and 30 parts of methyl ethyl ketone. Thereafter, the mixture was dispersed by using an ultrahigh pressure homogenizer (an Ultimaizer HJP-25005 manufactured by SUGINO MACHINE LIMITED) under 200 MPa in 15 passes. The thus obtained dispersion liquid was moved to another container, 300 parts of ion exchange water was added thereto, followed by stirring for one more hour. Thereafter, the total amount of methyl ethyl ketone and a part of the water were removed by distillation by using a rotary evaporator, and the resultant was neutralized with 0.1 mol/ L of sodium hydroxide so as to be adjusted to pH 9. The pigment solution was filtered through a 3 µm membrane filter and adjusted with the ion exchange water, thereby obtaining the pigment dispersion liquid C1 for a cyan ink with a pigment concentration of 15%.

### 3. Production of pigment dispersion liquid M1 for magenta ink

A pigment dispersion liquid M1 was produced in the same manner as the pigment dispersion liquid 1 by using a C.I. pigment red 122 (a quinacridone pigment manufactured by Clariant).

### 4. Production of pigment dispersion liquid Y1 for yellow ink

A pigment dispersion liquid Y1 was produced in the same manner as the pigment dispersion liquid 1 by using a C.I. pigment yellow 180 (a benzimidazolone pigment manufactured by Clariant).

### 5. Production of pigment dispersion liquid W1 for white ink

A pigment dispersion liquid W1 was produced in the same manner as the pigment dispersion liquid 1 by using a C.I. pigment white 6 (a rutile type titanium oxide pigment ST410WB manufactured by Clariant) and adjusting DISPERBYK-2015 as a dispersant manufactured by BYK Japan KK to be 12% of the mass of the pigment.

### 6. Production of fine polymer particles contained in ink

A reaction container was provided with a dropping device, a thermometer, a water-cooled reflux condenser, a stirrer, and 100 parts of ion exchange water was introduced thereto, followed by addition of 0.2 parts of potassium persulfate as a polymerization initiator at 70°C in a nitrogen atmosphere under stirring. Thereafter, a monomer solution in which 0.05 parts of sodium lauryl sulfate, 4 parts of glycidoxy acrylate, 15 parts of ethyl acrylate, 15 parts of butyl acrylate, 6 parts of tetrahydrofurfuryl acrylate, 5 parts of butyl methacrylate, and 0.02 parts of t-dodecyl mercaptan were added to 7 parts of ion exchange water was added dropwise thereto and reacted at 70°C, thereby producing a primary material.

2 parts of 10% ammonium persulfate solution was added to the primary material, followed by stirring. A reaction solution including 30 parts of ion exchange water, 0.2 parts of potassium lauryl sulfate, 30 parts of ethyl acrylate, 25 parts of methyl acrylate, 6 parts of butyl acrylate, 10 parts of acrylic acid, 0.5 parts of t-dodecyl mercaptan was further added thereto under stirring at 70°C and subjected to the polymerization reaction, followed by neutralization by using sodium hydroxide so as to be adjusted to pH 8 to 8.5, thereby producing an aqueous dispersion liquid of fine polymer particles filtered through a 0.3 µm filter.

Concentration adjustment was performed on the thus obtained liquid by adding water, thereby obtaining an emulsion A1 (EM-A1) of 40% solid concentration. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -15°C. The molecular weight thereof in terms of styrene was 150000, which was measured by using gel permeation chromatography (GPC) of a L7100 system manufactured by Hitachi., Ltd. and using THF as a solvent; also, the acid value thereof by a titration method was 40 mgKOH/g.

### 7. Preparation of ink jet recording ink

Hereinafter, an example of a composition suitable for an ink jet recording ink will be shown.

### Black Ink 1

Dispersion liquid Bk1 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.0%
Glycerin 11.0%
Triethylene glycol 1.5%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Cyan Ink 1

Dispersion liquid C1 (pigment solid concentration 15%) 24.0%
EM-A1 (solid concentration 40%) 12.5%
Triethylene glycol monobutyl ether 2.0%
1,2-hexanediol 1.0%
Trimethylolpropane 4.0%
Glycerin 12.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Ion exchange water remaining amount
Magenta Ink 1

Dispersion liquid M1 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Yellow Ink 1

Dispersion liquid Y1 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### White Ink 1

Dispersion liquid W1 (pigment solid concentration 15%) 50.0%
EM-A1 (solid concentration 40%) 12.5%
Triethylene glycol monobutyl ether 2.0%
1,2-hexanediol 1.0%
Trimethylolpropane 1.5%
Glycerin 8.0%
Triethylene glycol 1.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

As the remaining amount of water in all of the examples and comparative examples in the present example, water obtained by respectively adding 0.05% of Topcide 240 (manufactured by Permachem Asia Ltd.) for corrosion prevention of ink, 0.02% of benzotriazole for corrosion prevention of an ink jet head member and 0.04% of EDTA (ethylene diamine tetraacetic acid)·2Na salt for reducing the influence of metal ions in an ion system to the ion exchange water was used.

### Production of Printing Sample 1

Cotton was used as the fabric, and the pretreatment liquid 1 was coated thereto by an ink jet method using PX-A650. Thereafter, the black ink 1, the cyan ink 1, the magenta ink 1, the yellow ink 1 and the white ink 1 for an ink jet were printed on the coated resultant by the ink jet method using PX-A650, followed by drying at 160°C for 5 minutes, thereby producing a printed textile 1. Furthermore, although the black ink 1, the cyan ink 1, the magenta ink 1 and the yellow ink 1 were respectively used for each head corresponding to each color of PX-A650, the white ink 1 was placed in three heads for cyan, magenta and yellow of another PX-A650 so that the white ink 1 was printed on portions which were not printed in color, and whereby a printing sample 1 was produced.

### 1. Abrasion resistance test and dry cleaning property test

The printing sample 1 was subjected to a friction fastness test by being rubbed 200 times with a load of 300 g with the use of a color fastness rubbing tester AB-301S manufactured by Tester Sangyo Co., Ltd. The ink was evaluated in terms of two levels including dryness and wetness by the Japanese Industrial Standards (JIS) JIS L0849 for checking the peeling condition of ink. Also, the ink was subjected to a dry cleaning test so as to be evaluated by a B method of JIS L0860. Results of the abrasion resistance test and the dry cleaning test are shown in Table 1.

### 2. Measurement for color developability

The printing sample 1 was evaluated in terms of an OD value of black, saturation of cyan, magenta and yellow, and whiteness of white as indices of color developability by using a GRETAG SPECTROSCAN SPM-50. The results thereof are shown in Table 1.

### Example 2

### Preparation of Pretreatment Liquid 2

### 1. Production of pretreatment liquid 2

A pretreatment liquid 2 was produced in the same manner as in the preparation of the pretreatment liquid 1 except that 4 parts of the tetraethylene glycol was changed to 4 parts of hexamethylenediamine to obtain an aqueous dispersion of crosslinkable polyurethane-polyurea. This aqueous dispersion of crosslinkable polyurethane-polyurea was filtered through a 5.0 µm filter, thereby producing an aqueous dispersion liquid of fine polymer particles. Concentration adjustment was performed on the aqueous dispersion liquid of fine polymer particles by adding water, thereby producing an emulsion B (EM-B) of 40% solid concentration. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -20°C; also, the particle diameter thereof measured by using a Microtrac particle size distribution measurement device UPA 250 (manufactured by Nikkiso Co., Ltd.) was 110 nm. Furthermore, the amount of remaining tetrahydrofuran in the dried resultant was 61% at 25°C.

### Preparation of Black Ink 2, Cyan Ink 2, Magenta Ink 2, and Yellow Ink 2 for an Ink Jet

### 1. Production of pigment dispersion liquid Bk2 for black ink

A pigment dispersion liquid 2 for black ink was produced in the same manner as in Example 1 except that instead of Monarch 880, which is a carbon black (C.I pigment black 7), manufactured by Cabot Corporation (US), MA 100 manufactured by Mitsubishi Chemical Corporation was used for the pigment dispersion for black ink in Example 1.

### 2. Production of pigment dispersion liquid C2 for cyan ink

A dispersion 2 for cyan ink was produced in the same manner as Example 1 except that instead of the C.I. pigment blue 15:4 (a copper phthalocyanine pigment manufactured by Clariant) in Example 1, a C.I. pigment blue 15:3 (a copper phthalocyanine pigment manufactured by Clariant) was used.

### 3. Production of pigment dispersion liquid M2 for magenta ink

A dispersion 2 for magenta ink was produced in the same manner as in Example 1 except that instead of the C.I. pigment red 122 (a quinacridone pigment manufactured by Clariant) in Example 1, a C.I. pigment violet 19 (a quinacridone pigment manufactured by Clariant) was used.

### 4. Production of pigment dispersion liquid Y2 for yellow ink

A pigment dispersion liquid 2 for yellow ink was produced in the same manner as in Example 1 except that instead of the C.I. pigment yellow 180 (a benzimidazolone pigment manufactured by Clariant) in Example 1, a C.I. pigment yellow 185 (an isoindoline pigment manufactured by BASF) was used.

### 5. Production of pigment dispersion liquid W2 for white ink

A pigment dispersion liquid W1 was produced in the same manner as in Example 1 except that DISPERBYK-190 as a dispersant manufactured by BYK Japan KK was adjusted to be 12% of the mass of the pigment by using a C.I. pigment white 6 (a rutile type titanium oxide pigment CR-EL manufactured by Ishihara Sangyo Kaisha, Ltd.).

### 6. Preparation of ink jet recording ink

Hereinafter, an example of a composition suitable for an ink jet recording ink will be shown.

### Black Ink 2

Dispersion liquid Bk2 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.0%
Glycerin 11.0%
Triethylene glycol 1.50
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Cyan Ink 2

Dispersion liquid C2 (pigment solid concentration 15%) 24.0%
EM-A1 (solid concentration 40%) 12.5%
Triethylene glycol monobutyl ether 2.0%
1,2-hexanediol 1.0%
Trimethylolpropane 4.0%
Glycerin 12.0%
Triethylene glycol 2.0%
Surfynol 104 (an acetylene glycol surfactant manufactured by
Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Ion exchange water remaining amount

### Magenta Ink 2

Dispersion liquid M2 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Yellow Ink 2

Dispersion liquid Y2 (pigment solid concentration 15%) 32.0%
EM-A1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### White Ink 2

Dispersion liquid W2 (pigment solid concentration 15%) 50.0%
EM-A1 (solid concentration 40%) 12.5%
Triethylene glycol monobutyl ether 2.0%
1,2-hexanediol 1.0%
Trimethylolpropane 1.5%
Glycerin 8.0%
Triethylene glycol 1.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

As the remaining amount of water in all of the examples and comparative examples in the present example, water obtained by respectively adding 0.05% of Topcide 240 (manufactured by Permachem Asia Ltd.) for corrosion prevention of ink, 0.02% of benzotriazole for corrosion prevention of an ink jet head member and 0.04% of EDTA (ethylene diamine tetraacetic acid) · 2Na salt for reducing influence of metal ions in an ion system to the ion exchange water was used, in the same manner as in Example 1.

### Production of Printing Sample 2

Cotton was used as a fabric, and the pretreatment liquid 2 was coated thereto by an ink jet method using PX-A650. Thereafter, the black ink 2, the cyan ink 2, the magenta ink 2, the yellow ink 2 and the white ink 2 for an ink jet were coated by the ink jet method using PX-A650, followed by drying at 160°C for 5 minutes, thereby producing a printed textile 2. Furthermore, similarly to Example 1, although the black ink 2, the cyan ink 2, the magenta ink 2 and the yellow ink 2 were respectively used for each head corresponding to each color of PX-A650, the white ink 2 was placed in three heads for cyan, magenta and yellow of another PX-A650 so that the white ink 2 was printed on portions which were not printed with colors, and whereby a printing sample 2 was produced.

### 1. Abrasion resistance test and dry cleaning property test

The printing sample 2 was subjected to a friction fastness test by being rubbed 200 times with a load of 300 g with the use of a color fastness rubbing tester AB-301S manufactured by Tester Sangyo Co., Ltd. The ink was evaluated in terms of two levels including dryness and wetness by the Japanese Industrial Standards (JIS) JIS L0849 for checking peeling condition of ink. Also, the ink was subjected to a dry cleaning test so as to be evaluated by a B method of JIS L0860. Results of the abrasion resistance test and the dry cleaning test are shown in Table 1.

### 2. Measurement for color developability

The printing sample 2 was subjected to the abrasion resistance test, the dry cleaning test and the measurement for color developability in the same manner as Example 1. The results thereof are shown in Table 1.

### Example 3

A printing sample 3 was produced in the same manner as in Example 2 except that instead of the emulsion B in Example 2, a pretreatment liquid 3 as a mixture of 50:50 of the emulsion A and the emulsion B was used. By using the printing sample 3, the abrasion resistance test, the dry cleaning test and the measurement for color developability were performed in the same manner as in Example 1. The results thereof are shown in Table 1.

### Examples 4 to 8

Printing samples 4-1 to 4-5 were produced in the same manner as in Example 1 except that, in Example 1, the stirring speed was adjusted by a well-known method, fine polymer particles having the diameter of 30 nm (Example 4), 300 nm (Example 5), 500 nm (Example 6), 1 µm (Example 7) and 5 µm (Example 8) were produced, and emulsions C1 to C5 (EM-C1 to C5) with 40% solid concentration, which were aqueous fine polymer particle solutions, were used as pretreatment agents 4-1 to 4-5. Here, Example 8 could not be coated by the ink jet method, so it was coated by the padding method. The printing samples 4-1 to 4-5 were subjected to the abrasion resistance test, the dry cleaning test and the measurement for color developability in the same manner as in Example 1. The results thereof are shown in Table 1.

### Examples 9 to 13

Printing samples 5-1 to 5-5 were produced in the same manner as in Example 1 except that, in Example 1, the amount of trimethylolpropane was changed by a well-known method, fine polymer particles having a tetrahydrofuran (THF) insoluble portion of 90% (Example 9), 80% (Example 10), 70% (Example 11), 50% (Example 12) and 40% (Example 13) were produced, and emulsions D1 to D5 (EM-D1 to D5) with 40% solid concentration, which were aqueous fine polymer particle solutions, were used as pretreatment liquids 5-1 to 5-5. The printing samples 5-1 to 5-5 were subjected to the abrasion resistance test, the dry cleaning test and the measurement for color developability in the same manner as in Example 1. The results thereof are shown in Table 2.

### Example 14

By using hemp (a printing sample 6), rayon fibers (a printing sample 7), acetate fibers (a printing sample 8), silk (a printing sample 9), nylon fibers (a printing sample 10) and polyester fibers (a printing sample 11) instead of cotton as the fabric in Example 1, each printed textile was produced. By using each of the printing samples 6 to 11, the abrasion resistance test, the dry cleaning test and the measurement for color developability were performed in the same manner as in Example 1. The results thereof are shown in Table 4.

### Comparative Example 1

A printing sample 12 was produced in the same manner as in Example 1 except that a pretreatment liquid 6 was prepared by not adding calcium chloride in the pretreatment liquid 1 of Example 1. By using the printing sample 12, the abrasion resistance test, the dry cleaning test and the measurement for color developability were performed in the same manner as in Example 1. The results thereof are shown in Table 3.

### Comparative Example 2

In Example 1, the stirring speed was adjusted by a well-known method, fine polymer particles having a particle diameter of 6 µm were produced, an emulsion E (EM-E) having 40% solid concentration, which was an aqueous fine polymer particle solution, was used, and filtration by a filter was not performed, thereby preparing a pretreatment liquid 7. Furthermore, a printing sample 13 was produced in the same manner as Example except that the pretreatment liquid 7 was coated by the padding method since it could not be coated by the ink jet method. By using the printing sample 13, the abrasion resistance test, the dry cleaning test and the measurement for color developability were performed in the same manner as in Example 1. The results thereof are shown in Table 3.

### Comparative Example 3

A printing sample 14 was produced in the same manner as in Example 1 except that, in Example 1, the stirring speed was adjusted by a well-known method, fine polymer particles having a particle diameter of 25 nm were produced, an emulsion F (EM-F) having 40% solid concentration, which was an aqueous fine polymer particle solution, was used, thereby preparing a pretreatment liquid 8. By using the printing sample 14, the abrasion resistance test, the dry cleaning test and the measurement for color developability were performed in the same manner as in Example 1. The results thereof are shown in Table 3.

### Comparative Example 4

A printing sample 15 was produced in the same manner as in Example 1 except that, in Example 1, the amount of trimethylolpropane was changed by a well-known method, fine polymer particles having a tetrahydrofuran (THF) insoluble portion of 35% were produced, and an emulsion G (EM-G) with 40% solid concentration, which was aqueous fine polymer particle solution, was used as pretreatment liquid 9. By using the printing sample 15, the abrasion resistance test, the dry cleaning test and the measurement for color developability were performed in the same manner as in Example 1. The results thereof are shown in Table 3.

### Comparative Example 5

A printing sample 16 was produced in the same manner as in Example 1 except that, in Example 1, an emulsion A1 (acrylic resin) was used instead of the emulsion A (crosslinkable polyurethane) as a pretreatment liquid 10. By using the printing sample 16, the abrasion resistance test, the dry cleaning test and the measurement for color developability were performed in the same manner as in Example 1. The results thereof are shown in Table 3.

### Example 15

### Preparation of Pretreatment Liquid 11

### 1. Production of fine polymer particles 2

A reaction container was provided with a dropping device, a thermometer, a water-cooled reflux condenser, a nitrogen-introducing tube, a stirrer, and a heat regulator, and 70 parts of polycarbonate polyol (1,6-hexanediol base, Mw 1000), 26 parts of hexamethylene diisocyanate, and 76 parts of methyl ethyl ketone were added to the reaction container, followed by polymerization at 75°C over 3 hours. A salt solution including 14 parts of methyl ethyl ketone, 4 parts of tetraethylene glycol and 1.2 parts of sodium hydroxide, which was separately prepared in advance, was added to the reaction container, followed by another polymerization at 75°C for 2 hours. This urethane prepolymer solution was cooled to 30°C, and an aqueous solution in which 8 parts by mass of trimethylolpropane was dissolved in 260 parts by mass of water was added dropwise thereto, thereby performing a crosslinking reaction by phase-transfer emulsification. The resultant was stirred for an hour, and a part of the methyl ethyl ketone and the water was removed by distillation at 50°C under reduced pressure, thereby obtaining an aqueous dispersion of crosslinkable polyurethane. The aqueous dispersion of crosslinkable polyurethane was filtered by using a 5.0 µm filter to obtain an aqueous dispersion liquid of fine polymer particles. Concentration adjustment was performed on the aqueous dispersion liquid of fine polymer particles by adding water, thereby producing an emulsion H (EM-H) of 40% solid concentration. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -20°C; also, the particle diameter thereof measured by using a Microtrac particle size distribution measurement device UPA 250 (manufactured by Nikkiso Co., Ltd.) was 160 nm. Furthermore, the amount of remaining tetrahydrofuran in the dried resultant was 62% at 25°C.

### 2. Production of pretreatment liquid 11

EM-H (solid concentration 40%) 25.0%
Calcium chloride 10.5%
Olfin E1010 (an acetylene glycol surfactant manufactured by
Nissin Chemical Industry Co., Ltd.) 1.2%
Proxel XLII (manufactured by Arch Chemicals Japan, Inc.)
0.3%
1,2-hexanediol 0.5%
Triethylene glycol 0.5%
Ion-exchange water remaining amount

Each of the above additives was sequentially mixed and stirred, followed by filtration with a 5 µm filter, thereby preparing a pretreatment liquid 11.

### Preparation of Black Ink 3, Cyan Ink 3, Magenta Ink 3, and Yellow Ink 3 for an Ink Jet

### 1. Production of pigment dispersion liquid Bk3 for black ink

For a pigment dispersion liquid 2, Monarch 880, which is a carbon black (C.I pigment black 7), manufactured by Cabot Corporation (US) was used. The surface of the carbon black was oxidized in the same manner as in JP-A-8-3498 so as to be able to be dispersed in water and was adjusted with ion exchange water, thereby obtaining a pigment dispersion liquid Bk3 for black ink with a pigment solid concentration of 15%.

### 2. Production of pigment dispersion liquid C3 for cyan ink

For a dispersion liquid C3 for cyan ink, a C.I. pigment blue 15:4 (a copper phthalocyanine pigment manufactured by Clariant) was used. A reaction container provided with a stirrer, a thermometer, a refluxing tube and a funnel was filled with nitrogen, 75 parts of benzyl acrylate, 2 parts of acrylic acid and 0.3 parts of t-dodecyl mercaptan were added thereto, followed by heating at 70°C. While 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were put into the funnel so as to be added dropwise to the reaction container over 4 hours, the dispersion polymer was subjected to the polymerization reaction. Subsequently, methyl ethyl ketone was added to the reaction container, thereby producing a pigment dispersion polymer solution B having 40% concentration. A part of the polymer was taken to be dried, and the glass transition temperature thereof measured thereafter by a differential scanning calorimeter (EXSTAR 6000DSC manufactured by Seiko Instruments Inc.) was 40°C.

Furthermore, 40 parts of the pigment dispersion polymer solution B was mixed with 30 parts of C.I. pigment blue 15:4 (a copper phthalocyanine pigment manufactured by Clariant), 100 parts of 0.1 mol/L of aqueous sodium hydroxide solution and 30 parts of methyl ethyl ketone. Thereafter, the mixture was dispersed by using an ultrahigh pressure homogenizer (an Ultimaizer HJP-25005 manufactured by SUGINO MACHINE LIMITED) under 200 MPa in 15 passes. The thus obtained dispersion liquid was moved to another container, 300 parts of ion exchange water was added thereto, followed by stirring for one more hour. Thereafter, the total amount of methyl ethyl ketone and a part of the water were removed by distillation by using a rotary evaporator, and the resultant was neutralized with 0.1 mol/ L of sodium hydroxide so as to be adjusted to pH 9. The pigment solution was filtered through a 3 µm membrane filter and adjusted with the ion exchange water, thereby obtaining the pigment dispersion liquid C3 for a cyan ink with a pigment concentration of 15%.

### 3. Production of pigment dispersion liquid M3 for magenta ink

A pigment dispersion liquid M3 was produced in the same manner as the pigment dispersion liquid 2 by using a C.I. pigment red 122 (a quinacridone pigment manufactured by Clariant).

### 4. Production of pigment dispersion liquid Y3 for yellow ink

A pigment dispersion liquid Y3 was produced in the same manner as the pigment dispersion liquid 2 by using a C.I. pigment yellow 180 (a benzimidazolone pigment manufactured by Clariant).

### 5. Production of pigment dispersion liquid W3 for white ink

A pigment dispersion liquid W3 was produced in the same manner as the pigment dispersion liquid 2 by using a C.I. pigment white 6 (a rutile type titanium oxide pigment ST410WB manufactured by Titan Kogyou, Ltd.) and adjusting DISPERBYK-2015 as a dispersant manufactured by BYK Japan KK to be 12% of the mass of the pigment.

### 6. Production of fine polymer particles contained in ink

A reaction container was provided with a dropping device, a thermometer, a water-cooled reflux condenser, a nitrogen-introducing tube, a stirrer and a heat regulator, and 70 parts of polycarbonate polyol (1,6-hexanediol base, Mw 1000), 26 parts of hexamethylene diisocyanate, and 76 parts of methyl ethyl ketone were added to the reaction container, followed by polymerization at 75°C over 3 hours. A salt solution including 14 parts of methyl ethyl ketone, 4 parts of dimethylol butanoic acid and 1.2 parts of sodium hydroxide, which was separately prepared in advance, was added to the reaction container, followed by another polymerization at 75°C for 2 hours. This urethane prepolymer solution was cooled to 30°C, and an aqueous solution in which 8 parts by mass of trimethylolpropane was dissolved in 260 parts by mass of water was added dropwise thereto, thereby performing a crosslinking reaction by phase-transfer emulsification. The resultant was stirred for an hour, and a part of the methyl ethyl ketone and the water was removed by distillation at 50°C under reduced pressure, followed by concentration adjustment by adding water, thereby producing an emulsion U1 (EM-U1) of 40% solid concentration. The aqueous dispersion of the polyurethane was filtered through a 5.0 µm filter, thereby producing an aqueous dispersion liquid of fine polymer particles. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -20°C.

### 7. Preparation of ink jet recording ink

Hereinafter, an example of a composition suitable for an ink jet recording ink will be shown.

### Black Ink 3

Dispersion liquid Bk3 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.0%
Glycerin 11.0%
Triethylene glycol 1.5%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Cyan Ink 3

Dispersion liquid C3 (pigment solid concentration 15%) 24.0%
EM-U1 (solid concentration 40%) 12.5%
Triethylene glycol monobutyl ether 2.0%
1,2-hexanediol 1.0%
Trimethylolpropane 4.0%
Glycerin 12.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Ion exchange water remaining amount

### Magenta Ink 3

Dispersion liquid M3 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by
Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount
Yellow Ink 3

Dispersion liquid Y3 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### White Ink 3

Dispersion liquid W3 (pigment solid concentration 15%) 50.0%
EM-U1 (solid concentration 40%) 12.5%
Triethylene glycol monobutyl ether 2.0%
1,2-hexanediol 1.0%
Trimethylolpropane 1.5%
Glycerin 8.0%
Triethylene glycol 1.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

As the remaining amount of water in all of the examples and comparative examples in the present example, water obtained by respectively adding 0.05% of Topcide 240 (manufactured by Permachem Asia Ltd.) for corrosion prevention of ink, 0.02% of benzotriazole for corrosion prevention of an ink jet head member and 0.04% of EDTA (ethylene diamine tetraacetic acid) · 2Na salt for reducing influence of metal ions in an ion system to the ion exchange water was used.

### Production of Printing Sample 17

Cotton was used as a fabric, and the pretreatment liquid 11 was coated thereto by an ink jet method using PX-A650. Thereafter, the black ink 3, the cyan ink 3, the magenta ink 3, the yellow ink 3 and the white ink 3 for an ink jet were printed on the coated resultant by the ink jet method using PX-A650, followed by drying at 160°C for 5 minutes, thereby producing a printed textile 17. Furthermore, although the black ink 3, the cyan ink 3, the magenta ink 3 and the yellow ink 3 were respectively used for each head corresponding to each color of PX-A650, the white ink 3 was placed in three heads for cyan, magenta and yellow of another PX-A650 so that the white ink 3 was printed on portions which were not printed in color, and whereby a printing sample 17 was produced.

### 1. Abrasion resistance test and dry cleaning property test

The printing sample 17 was subjected to a friction fastness test by being rubbed 200 times with a load of 300 g with the use of a color fastness rubbing tester AB-301S manufactured by Tester Sangyo Co., Ltd. The ink was evaluated in terms of two levels including dryness and wetness by the Japanese Industrial Standards (JIS) JIS L0849 for checking the peeling condition of ink. Also, the ink was subjected to a dry cleaning test so as to be evaluated by a B method of JIS L0860. Results of the abrasion resistance test and the dry cleaning test are shown in Table 5.

### 2. Measurement for color developability

The printing sample 1 was evaluated in terms of an OD value of black, saturation of cyan, magenta and yellow, and whiteness of white as indices of color developability by using a GRETAC SPECTROSCAN SPM-50. The results thereof are shown in Table 5.

### Example 16

### Preparation of Pretreatment Liquid 12

### 1. Production of pretreatment liquid 12

A pretreatment liquid 12 was produced in the same manner as in the preparation of the pretreatment liquid 11 except that 4 parts of the tetraethylene glycol was changed to 4 parts of hexamethylenediamine to obtain an aqueous dispersion of crosslinkable polyurethane-polyurea. This aqueous dispersion of crosslinkable polyurethane-polyurea was filtered through a 5.0 µm filter, thereby producing an aqueous dispersion liquid of fine polymer particles. Concentration adjustment was performed on the aqueous dispersion liquid of fine polymer particles by adding water, thereby producing an emulsion I (EM-I) of 40% solid concentration. A part of the aqueous dispersion liquid of fine polymer particles was taken to be dried, and the glass transition temperature thereof measured thereafter by a differential scanning calorimeter (EXSTAR 6000DSC manufactured by Seiko Instruments Inc.) was -20°C. Furthermore, the amount of remaining tetrahydrofuran in the dried resultant was 61% at 25°C.

### Preparation of Black Ink 4, Cyan Ink 4, Magenta Ink 4, and Yellow Ink 4 for an Ink Jet

### 1. Production of pigment dispersion liquid Bk4 for black ink

A pigment dispersion liquid 4 for black ink was produced in the same manner as Example 15 except that instead of Monarch 880, which is a carbon black (C.I pigment black 7), manufactured by Cabot Corporation (US), MA 100 manufactured by Mitsubishi Chemical Corporation was used for the pigment dispersion for black ink in Example 15.

### 2. Production of pigment dispersion liquid C4 for cyan ink

A dispersion 4 for cyan ink was produced in the same manner as Example 15 except that instead of the C.I. pigment blue 15:4 (a copper phthalocyanine pigment manufactured by Clariant) in Example 15, a C.I. pigment blue 15:3 (a copper phthalocyanine pigment manufactured by Clariant) was used.

### 3. Production of pigment dispersion liquid M4 for magenta ink

A dispersion 4 for magenta ink was produced in the same manner as Example 15 except that instead of the C.I. pigment red 122 (a quinacridone pigment manufactured by Clariant) in Example 15, a C.I. pigment violet 19 (a quinacridone pigment manufactured by Clariant) was used.

### 4. Production of pigment dispersion liquid Y4 for yellow ink

A pigment dispersion liquid 4 for yellow ink was produced in the same manner as Example 15 except that instead of the C.I. pigment yellow 180 (a benzimidazolone pigment manufactured by Clariant) in Example 15, a C.I. pigment yellow 185 (an isoindoline pigment manufactured by BASF) was used.

### 5. Production of pigment dispersion liquid W4 for white ink

A pigment dispersion liquid W4 was produced in the same manner as Example 15 except that DISPERBYK-190 as a dispersant manufactured by BYK Japan KK was adjusted to be 12% of the mass of the pigment by using a C.I. pigment white 6 (a rutile type titanium oxide pigment CR-EL manufactured by Ishihara Sangyo Kaisha, Ltd.).

### 6. Preparation of ink jet recording ink

Hereinafter, an example of a composition suitable for an ink jet recording ink will be shown.

### Black Ink 4

Dispersion liquid Bk4 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.0%
Glycerin 11.0%
Triethylene glycol 1.5%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Cyan Ink 4

Dispersion liquid C4 (pigment solid concentration 15%) 24.0%
EM-U1 (solid concentration 40%) 12.5%
Triethylene glycol monobutyl ether 2.0%
1,2-hexanediol 1.0%
Trimethylolpropane 4.0%
Glycerin 12.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Ion exchange water remaining amount

### Magenta Ink 4

Dispersion liquid M4 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### Yellow Ink 4

Dispersion liquid Y4 (pigment solid concentration 15%) 32.0%
EM-U1 (solid concentration 40%) 12.5%
Triethylene glycol monobutyl ether 2.0%
1,2-hexanediol 1.0%
Trimethylolpropane 3.5%
Glycerin 11.0%
Triethylene glycol 2.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

### White Ink 4

Dispersion liquid W4 (pigment solid concentration 15%) 50.0%
EM-U1 (solid concentration 40%) 12.5%
Triethylene glycol monobutyl ether 2.0%
1,2-hexanediol 1.0%
Trimethylolpropane 1.5%
Glycerin 8.0%
Triethylene glycol 1.0%
Surfynol 104 (an acetylene glycol surfactant manufactured by Nissin Chemical Industry Co., Ltd.) 0.1%
Olfin E1010 (an acetylene glycol surfactant manufactured by Nissin Chemical Industry Co., Ltd.) 0.8%
Proxel XLII (manufactured by Arch Chemicals Japan, Inc.) 0.3%
1,2-hexanediol 0.5%
Water remaining amount

As the remaining amount of water in all of the examples and comparative examples in the present example, water obtained by respectively adding 0.05% of Topcide 240 (manufactured by Permachem Asia Ltd.) for corrosion prevention of ink, 0.02% of benzotriazole for corrosion prevention of an ink jet head member and 0.04% of EDTA (ethylene diamine tetraacetic acid) · 2Na salt for reducing influence of metal ions in an ion system to the ion exchange water was used, in the same manner as Example 15.

### Production of Printing Sample 18

Cotton was used as a fabric, and the pretreatment liquid 16 was coated thereto by an ink jet method using PX-A650. Thereafter, the black ink 4, the cyan ink 4, the magenta ink 4, the yellow ink 4 and the white ink 4 for an ink jet were printed on the coated resultant by the ink jet method using PX-A650, followed by drying at 160°C for 5 minutes, thereby producing a printed textile 18. Herein, in the same manner as Example 15, although the black ink 4, the cyan ink 4, the magenta ink 4 and the yellow ink 4 were respectively used for each head corresponding to each color of PX-A650, the white ink 4 was placed in three heads for cyan, magenta and yellow of another PX-A650 so that the white ink 4 was printed on portions which were not printed with colors, and whereby a printing sample 18 was produced.

### 1. Abrasion resistance test and dry cleaning property test

The printing sample 18 was subjected to a friction fastness test by being rubbed 200 times with a load of 300 g with the use of a color fastness rubbing tester AB-301S manufactured by Tester Sangyo Co., Ltd. The ink was evaluated in terms of two levels including dryness and wetness by the Japanese Industrial Standards (JIS) JIS L0849 for checking the peeling condition of ink. Also, the ink was subjected to a dry cleaning test so as to be evaluated by a B method of JIS L0860, in the same manner. Results of the abrasion resistance test and the dry cleaning test are shown in Table 5.

### 2. Measurement for color developability

By using the printing sample 2, the abrasion resistance test, the dry cleaning test and the measurement for color developability were performed in the same manner as in Example 1. The results thereof are shown in Table 5.

### Example 17

A printing sample 19 was produced in the same manner as in Example 16 except that instead of the emulsion I in Example 16, a pretreatment liquid 13 as a mixture of 50:50 of the emulsion H and the emulsion I was used. By using the printing sample 19, the abrasion resistance test, the dry cleaning test and the measurement for color developability were performed in the same manner as in Example 15. The results thereof are shown in Table 5.

### Example 18

An emulsion U2 (EM-U2) of 40% solid concentration was produced in the same manner as in Example 15 except that, in production of second fine polymer particles included in the ink in Example 16, 70 parts of polycarbonate polyol (1,6-hexanediol base, Mw 1000) was changed to 65 parts of polycarbonate polyol (1,6-hexanediol base, Mw 1000) and to 5 parts of hexamethylenediamine to obtain crosslinkable polyurethane-polyurea. This aqueous dispersion of crosslinkable polyurethane-polyurea was filtered through a 5.0 µm filter, thereby producing an aqueous dispersion liquid of the second fine polymer particles. A part of the aqueous dispersion liquid of the second fine polymer particles was taken to be dried, and the glass transition temperature thereof measured thereafter by a differential scanning calorimeter (EXSTAR 6000DSC manufactured by Seiko Instruments Inc.) was -19°C. A printing sample 20 was produced in the same manner as in Example 15 except that the emulsion U1 in Example 15 was replaced with the emulsion U2 to produce a black ink 5, a cyan ink 5, a magenta ink 5, a yellow ink 5 and a white ink 5 for an ink jet. By using the printing sample 20, the abrasion resistance test, the dry cleaning test and the measurement for color developability were performed in the same manner as in Example 1. The results thereof are shown in Table 5.

### Example 19

A printing sample 21 was produced in the same manner as in Example 15 except that, in Example 15, the emulsion U1 as the second fine polymer particles contained in ink was replaced with an emulsion U3(EM-U3) as a mixture of 50:50 of the emulsion U1 and the emulsion U2 to produce a black ink 6, a cyan ink 6, a magenta ink 6, a yellow ink 6 and a white ink 6 for an ink jet. By using the printing sample 21, the abrasion resistance test, the dry cleaning test and the measurement for color developability were performed in the same manner as in Example 15. The results thereof are shown in Table 5.

### Examples 20 to 24

Printing samples 22-1 to 22-5 were produced in the same manner as in Example 15 except that, in Example 15, the stirring speed was adjusted by a well-known method, the first fine polymer particles having the diameter of 30 nm (Example 20), 300 nm (Example 21), 500 nm (Example 22), 1 µm (Example 23) and 5 µm (Example 24) were produced, and emulsions J1 to J5 (EM-J1 to J5) with 40% solid concentration, which were aqueous solutions of the first fine polymer particles, were used as pretreatment liquids 14-1 to 14-5. Here, Example 24 could not be coated by the ink jet method, so it was coated by the padding method. The printing samples 22-1 to 22-5 were subjected to the abrasion resistance test, the dry cleaning test and the measurement for color developability in the same manner as in Example 15. The results thereof are shown in Table 6.

### Examples 25 to 29

Printing samples 23-1 to 23-5 were produced in the same manner as in Example 15 except that, in Example 15, the amount of trimethylolpropane was changed by a well-known method, the first fine polymer particles having a tetrahydrofuran (THF) insoluble portion of 90% (Example 25), 80% (Example 26), 70% (Example 27), 50% (Example 28) and 40% (Example 29) were produced, and emulsions K1 to K5 (EM-K1 to K5) with 40% solid concentration, which were aqueous solutions of the first fine polymer particles, were used as pretreatment liquid 15-1 to 15-5. The printing samples 23-1 to 23-5 were subjected to the abrasion resistance test, the dry cleaning test and the measurement for color developability in the same manner as in Example 1. The results thereof are shown in Table 7.

### Example 30

By using hemp (a printing sample 24), rayon fibers (a printing sample 25), acetate fibers (a printing sample 26), silk (a printing sample 27), nylon fibers (a printing sample 28) and polyester fibers (a printing sample 29) instead of cotton as the fabric in Example 15, each printed textile was produced. By using each of the printing samples 24 to 29, the abrasion resistance test, the dry cleaning test and the measurement for color developability were performed in the same manner as in Example 1. The results thereof are shown in Table 9.

### Comparative Example 6

A printing sample 30 was produced in the same manner as in Example 15 except that a pretreatment liquid 16 was prepared by not adding calcium chloride in the pretreatment liquid 11 of Example 15. By using the printing sample 30, the abrasion resistance test, the dry cleaning test and the measurement for color developability were performed in the same manner as in Example 15. The results thereof are shown in Table 8.

### Comparative Example 7

In Example 15, the stirring speed was adjusted by a well-known method, the first fine polymer particles having a particle diameter of 6 µm were produced, an emulsion L (EM-L) having 40% solid concentration, which was an aqueous solution of the first fine polymer particles, was used, and filtration by a filter was not performed, thereby preparing a pretreatment liquid 17. Furthermore, a printing sample 31 was produced in the same manner as in Example 15 except that the pretreatment liquid 17 was coated by the padding method since it could not be coated by the ink jet method. By using the printing sample 31, the abrasion resistance test, the dry cleaning test and the measurement for color developability were performed in the same manner as in Example 15. The results thereof are shown in Table 8.

### Comparative Example 8

A printing sample 32 was produced in the same manner as in Example 15 except that, in Example 15, the stirring speed was adjusted by a well-known method, the first fine polymer particles having a particle diameter of 25 nm were produced, an emulsion M (EM-M) having 40% solid concentration, which was an aqueous solution of the first fine polymer particles, was used, thereby preparing a pretreatment liquid 18. By using the printing sample 32, the abrasion resistance test, the dry cleaning test and the measurement for color developability were performed in the same manner as in Example 15. The results thereof are shown in Table 8.

### Comparative Example 9

A printing sample 33 was produced in the same manner as in Example 15 except that, in Example 15, the amount of trimethylolpropane was changed by a well-known method, the first fine polymer particles having a tetrahydrofuran (THF) insoluble portion of 35% were produced, and emulsion N (EM-N) with 40% solid concentration, which was an aqueous solution of the first fine polymer particles, was used as pretreatment liquid 19. By using the printing sample 33, the abrasion resistance test, the dry cleaning test and the measurement for color developability were performed in the same manner as in Example 15. The results thereof are shown in Table 8.

### Comparative Example 10

A printing sample 34 was produced in the same manner as in Example 15 except that, in Example 15, an emulsion A2 (acrylic resin) was used instead of an emulsion H (crosslinkable polyurethane) as a pretreatment liquid 20.

The emulsion A2 was produced in the following manner. A reaction container was provided with a dropping device, a thermometer, a water-cooled reflux condenser and a stirrer, and 100 parts of ion exchange water was introduced thereto, followed by addition of 0.2 parts of potassium persulfate as a polymerization initiator at 70°C in a nitrogen atmosphere under stirring. Thereafter, a monomer solution in which 0.05 parts of sodium lauryl sulfate, 4 parts of glycidoxy acrylate, 15 parts of ethyl acrylate, 15 parts of butyl acrylate, 6 parts of tetrahydrofurfuryl acrylate, 5 parts of butyl methacrylate, and 0.02 parts of t-dodecyl mercaptan were added to 7 parts of ion exchange water was added dropwise thereto and reacted at 70°C, thereby producing a primary material. 2 parts of 10% ammonium persulfate solution was added to the primary material, followed by stirring. A reaction solution including 30 parts of ion exchange water, 0.2 parts of potassium lauryl sulfate, 30 parts of ethyl acrylate, 25 parts of methyl acrylate, 6 parts of butyl acrylate, 5 parts of acrylic acid, 0.5 parts of t-dodecyl mercaptan was further added thereto under stirring at 70°C and subjected to the polymerization reaction, followed by neutralization by using sodium hydroxide so as to be adjusted to pH 8 to 8.5, thereby producing an aqueous dispersion liquid of fine polymer particles filtered through a 0.3 µm filter. Concentration adjustment was performed on the thus obtained liquid by adding water, thereby obtaining an emulsion A2 (EM-A2) of 40% solid concentration. By using the printing sample 34, the abrasion resistance test, the dry cleaning test and the measurement for color developability were performed in the same manner as in Example 15. The results thereof are shown in Table 8.

**Table 1**

| Results of abrasion resistance test, dry cleaning property test and color developability in Examples 1 to 8 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Example 1 | Pretreatment liquid 1 (Printing sample 1) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 2 | Pretreatment liquid 2 (Printing sample 2) | Bk2 | 5.0 | 4.5 | 4.5 | - | 1.21 | - |
| | | C2 | 5.0 | 4.5 | 4.5 | 42 | - | - |
| | | M2 | 5.0 | 4.5 | 5.0 | 43 | - | - |
| | | Y2 | 5.0 | 5.0 | 5.0 | 53 | - | - |
| | | W2 | 5.0 | 5.0 | 5.0 | - | - | 78 |
| Example 3 | Pretreatment liquid 3 (Printing sample 3) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 4 | Pretreatment liquid 4-1 (Printing sample 4-1) | Bk1 | 4.0 | 4.0 | 4.0 | - | 1.14 | - |
| | | C1 | 4.0 | 4.0 | 4.0 | 40 | - | - |
| | | M1 | 4.5 | 4.0 | 4.5 | 41 | - | - |
| | | Y1 | 4.5 | 4.0 | 4.5 | 51 | - | - |
| | | W1 | 4.5 | 4.0 | 4.5 | - | - | 72 |
| Example 5 | Pretreatment liquid 4-2 (Printing samples 4-2) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 6 | Pretreatment liquid 4-3 (Printing sample 4-3) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 7 | Pretreatment liquid 4-4 (Printing sample 4-4) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 8 | Pretreatment liquid 4-5 (Printing sample 4-5) | Bk1 | 4.5 | 4.0 | 4.0 | - | 1.23 | - |
| | | C1 | 4.5 | 4.0 | 4.0 | 44 | - | - |
| | | M1 | 4.5 | 4.0 | 4.5 | 46 | - | - |
| | | Y1 | 4.5 | 4.5 | 4.5 | 57 | - | - |
| | | W1 | 4.5 | 4.5 | 4.5 | - | - | 79 |

**Table 2**

| Results of abrasion resistance test, dry cleaning property test and color developability in Examples 9 to 13 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Example 9 | Pretreatment liquid 5-1 (Printing sample 5-1) | Bk1 | 4.5 | 4.5 | 4.5 | - | 1.25 | - |
| | | C1 | 4.5 | 4.5 | 4.5 | 45 | - | - |
| | | M1 | 5.0 | 4.5 | 4.5 | 47 | - | - |
| | | Y1 | 5.0 | 5.0 | 4.5 | 58 | - | - |
| | | W1 | 5.0 | 5.0 | 4.5 | - | - | 82 |
| Example 10 | Pretreatment liquid 5-2 (Printing sample 5-2) | Bk1 | 4.5 | 4.5 | 4.5 | - | 1.23 | - |
| | | C1 | 4.5 | 4.5 | 4.5 | 44 | - | - |
| | | M1 | 5.0 | 5.0 | 4.5 | 46 | - | - |
| | | Y1 | 5.0 | 5.0 | 5.0 | 56 | - | - |
| | | W1 | 5.0 | 5.0 | 5.0 | - | - | 80 |
| Example 11 | Pretreatment liquid 5-3 (Printing sample 5-3) | Bk1 | 5.0 | 4.5 | 4.5 | - | 1.22 | - |
| | | C1 | 5.0 | 4.5 | 4.5 | 43 | - | - |
| | | M1 | 5.0 | 5.0 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 12 | Pretreatment liquid 5-4 (Printing sample 5-4) | Bk1 | 5.0 | 4.5 | 4.5 | - | 1.22 | - |
| | | C1 | 5.0 | 4.5 | 4.5 | 43 | - | - |
| | | M1 | 5.0 | 4.5 | 5.0 | 45 | - | - |
| | | Y1 | 5.0 | 5.0 | 5.0 | 55 | - | - |
| | | W1 | 5.0 | 5.0 | 5.0 | - | - | 78 |
| Example 13 | Pretreatment liquid 5-5 (Printing sample 5-5) | Bk1 | 4.5 | 4.5 | 4.5 | - | 1.19 | - |
| | | C1 | 4.5 | 4.5 | 4.5 | 42 | - | - |
| | | M1 | 4.5 | 4.5 | 4.5 | 43 | - | - |
| | | Y1 | 5.0 | 4.5 | 4.5 | 52 | - | - |
| | | W1 | 5.0 | 4.5 | 4.5 | - | - | 75 |

**Table 3**

| Results of abrasion resistance test, dry cleaning property test and color developability in Comparative examples 1 to 5 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Comparative example 1 | Pretreatment liquid 6 (Printing sample 12) | Bk1 | 4.5 | 4.0 | 4.5 | - | 0.51 | - |
| | | C1 | 4.5 | 4.0 | 4.5 | 40 | - | - |
| | | M1 | 4.5 | 4.5 | 4.5 | 41 | - | - |
| | | Y1 | 4.5 | 4.5 | 4.5 | 47 | - | - |
| | | W1 | 4.5 | 4.5 | 4.5 | - | - | 30 |
| Comparative example 2 | Pretreatment liquid 7 (Printing sample 13) | Bk1 | 4.0 | 3.5 | 3.0 | - | 1.12 | - |
| | | C1 | 4.0 | 3.5 | 3.0 | 40 | - | - |
| | | M1 | 5.0 | 4.5 | 3.0 | 44 | - | - |
| | | Y1 | 5.0 | 4.5 | 3.0 | 56 | - | - |
| | | W1 | 4.0 | 4.5 | 4.0 | - | - | 83 |
| Comparative example 3 | Pretreatment liquid 8 (Printing sample 14) | Bk1 | 4.0 | 3.5 , | 3.5 | - | 1.09 | - |
| | | C1 | 4.0 | 3.5 | 3.5 | 38 | - | |
| | | M1 | 4.0 | 4.0 | 4.0 | 39 | - | - |
| | | Y1 | 4.0 | 4.0 | 4.0 | 47 | - | - |
| | | W1 | 4.0 | 4.0 | 4.0 | - | - , | 69 |
| Comparative example 4 | Pretreatment liquid 9 (Printing sample 15) | Bk1 | 4.0 | 3.0 | 4.0 | - | 1.08 | - |
| | | C1 | 4.0 | 3.0 | 4.0 | 39 | - | - |
| | | M1 | 4.5 | 4.0 | 4.5 | 42 | - | - |
| | | Y1 | 4.5 | 4.0 | 4.5 | 49 | - | - |
| | | W1 | 4.0 | 4.0 | 4.5 | - | - | 78 |
| Comparative example 5 | Pretreatment liquid 10 (Printing sample 16) | Bk1 | 3.5 | 3.0 | 3.5 | - | 1.02 | - |
| | | C1 | 3.5 | 3.0 | 3.5 | 40 | - | - |
| | | M1 | 4.0 | 3.5 | 4.0 | 42 | - | - |
| | | Y1 | 4.0 | 3.5 | 4.0 | 51 | - | - |
| | | W1 | 4.0 | 3.5 | 4.0 | - | - | 72 |

**Table 4**

| Results of abrasion resistance test, dry cleaning property test and color developability in Example 14 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Hemp | Pretreatment liquid 1 (Printing sample 6) | Bk1 | 4.5 | 4.0 | 5.0 | - | 1.24 | - |
| | | C1 | 4.5 | 4.0 | 5.0 | 44 | - | - |
| | | M1 | 5.0 | 4.0 | 5.0 | 46 | - | - |
| | | Y1 | 5.0 | 4.5 | 5.0 | 56 | - | - |
| | | W1 | 4.5 | 4.5 | 5.0 | - | - | 80 |
| Rayon fiber | Pretreatment liquid 1 (Printing sample 7) | Bk1 | 4.5 | 4.0 | 4.5 | - | 1.21 | - |
| | | C1 | 4.5 | 4.0 | 4.5 | 42 | - | - |
| | | M1 | 5.0 | 4.0 | 4.5 | 45 | - | - |
| | | Y1 | 5.0 | 4.5 | 5.0 | 53 | - | - |
| | | W1 | 4.5 | 4.5 | 5.0 | - | - | 78 |
| Acetate fiber | Pretreatment liquid 1 (Printing sample 8) | Bk1 | 4.5 | 4.0 | 4.5 | - | 1.2 | - |
| | | C1 | 4.5 | 4.0 | 4.5 | 42 | - | - |
| | | M1 | 5.0 | 5.0 | 5.0 | 44 | - | - |
| | | Y1 | 5.0 | 5.0 | 5.0 | 53 | - | - |
| | | W1 | 4.5 | 4.0 | 5.0 | - | - | 79 |
| Silk | Pretreatment liquid 1 (Printing sample 9) | Bk1 | 4.5 | 4.0 | 4.0 | - | 1.2 | - |
| | | C1 | 4.5 | 4.0 | 4.5 | 42 | - | - |
| | | M1 | 4.5 | 4.0 | 5.0 | 43 | - | - |
| | | Y1 | 4.5 | 4.5 | 5.0 | 53 | - | - |
| | | W1 | 4.5 | 4.5 | 5.0 | - | - | 76 |
| Nylon fiber | Pretreatment liquid 1 (Printing sample 10) | Bk1 | 4.5 | 4.0 | 4.5 | - | 1.21 | - |
| | | C1 | 4.5 | 4.0 | 4.5 | 42 | - | - |
| | | M1 | 4.5 | 4.0 | 4.5 | 44 | - | - |
| | | Y1 | 4.5 | 4.0 | 5.0 | 54 | - | - |
| | | W1 | 4.5 | 4.0 | 5.0 | - | - | 76 |
| Polyester fiber | Pretreatment liquid 1 (Printing sample 11) | Bk1 | 4.0 | 4.0 | 4.0 | - | 1.2 | - |
| | | C1 | 4.0 | 4.0 | 4.0 | 42 | - | - |
| | | M1 | 4.5 | 4.0 | 4.0 | 44 | - | - |
| | | Y1 | 4.5 | 4.0 | 4.0 | 53 | - | - |
| | | W1 | 4.5 | 4.0 | 4.0 | - | - | 77 |

**Table 5**

| Results of abrasion resistance test, dry cleaning property test and color developability in Examples 15 to 19 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Example 15 | Pretreatment liquid 11 (Printing sample 17) | Bk3 | 5.0 | 5.0 | 5.0 | - | 1.23 | - |
| | | C3 | 5.0 | 5.0 | 5.0 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 16 | Pretreatment liquid 12 (Printing sample 18) | Bk4 | 5.0 | 5.0 | 5.0 | - | 1.25 | - |
| | | C4 | 5.0 | 5.0 | 5.0 | 44 | - | |
| | | M4 | 5.0 | 5.0 | 5.0 | 46 | - | - |
| | | Y4 | 5.0 | 5.0 | 5.0 | 57 | - | - |
| | | W4 | 5.0 | 5.0 | 5.0 | - | - | 84 |
| Example 17 | Pretreatment liquid 13 (Printing sample 19) | Bk3 | 5.0 | 5.0 | 5.0 | - | 1.24 | - |
| | | C3 | 5.0 | 5.0 | 5.0 | 44 | - | - |
| | | M3 | 5.0 | 5.0 | 5.0 | 45 | - | - |
| | | Y3 | 5.0 | 5.0 | 5.0 | 56 | - | - |
| | | W3 | 5.0 | 5.0 | 5.0 | - | - | 83 |
| Example 18 | Pretreatment liquid 11 (Printing sample 20) | Bk5 | 5.0 | 5.0 | 5.0 | - | 1.22 | - |
| | | C5 | 5.0 | 5.0 | 5.0 | 43 | - | - |
| | | M5 | 5.0 | 5.0 | 5.0 | 44 | - | - |
| | | Y5 | 5.0 | 5.0 | 5.0 | 54 | ; - | - |
| | | W5 | 5.0 | 5.0 | 5.0 | - | - | 81 |
| Example 19 | Pretreatment liquid 11 (Printing sample 21) | Bk6 | 5.0 | 5.0 | 5.0 | - | 1.23 | - |
| | | C6 | 5.0 | 5.0 | 5.0 | 43 | - | - |
| | | M6 | 5.0 | 5.0 | 5.0 | 44 | - | - |
| | | Y6 | 5.0 | 5.0 | 5.0 | 55 | - | - |
| | | W6 | 5.0 | 5.0 | 5.0 | - | - | 81 |

**Table 6**

| Results of abrasion resistance test, dry cleaning property test and color developability in Examples 20 to 24 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Example 20 | Pretreatment liquid 14-1 (Printing sample 22-1) | Bk3 | 4.5 | 4.0 | 4.5 | - | 1.18 | - |
| | | C3 | 4.5 | 4.0 | 4.5 | 41 | - | - |
| | | M3 | 5.0 | 4.5 | 4.5 | 42 | - | - |
| | | Y3 | 5.0 | 4.5 | 4.5 | 53 | - | - |
| | | W3 | 5.0 | 4.5 | 4.5 | - | - | 75 |
| Example 21 | Pretreatment liquid 14-2 (Printing sample 22-2) | Bk3 | 5.0 | 5.0 | 5.0 | - | 1.23 | - |
| | | C3 | 5.0 | 5.0 | 5.0 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 22 | Pretreatment liquid 14-3 (Printing sample 22-3) | Bk3 | 5.0 | 5.0 | 5.0 | - | 1.23 | - |
| | | C3 | 5.0 | 5.0 | 5.0 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 23 | Pretreatment liquid 14-4 (Printing sample 22-4) | Bk3 | 4.5 | 4.5 | 4.5 | - | 1.23 | - |
| | | C3 | 4.5 | 4.5 | 4.5 | 45 | - | - |
| | | M3 | 5.0 | 4.5 | 5.0 | 46 | - | - |
| | | Y3 | 5.0 | 4.5 | 5.0 | 56 | - | - |
| | | W3 | 5.0 | 4.5 | 5.0 | - | - | 83 |
| Example 24 | Pretreatment liquid 14-5 (Printing sample 22-5) | Bk3 | 4.0 | 4.0 | 4.0 | - | 1.18 | - |
| | | C3 | 4.0 | 4.0 | 4.0 | 44 | - | - |
| | | M3 | 4.5 | 4.0 | 4.5 | 46 | - | - |
| | | Y3 | 4.5 | 4.5 | 4.5 | 57 | - | - |
| | | W3 | 4.5 | 4.5 | 4.5 | - | - | 78 |

**Table 7**

| Results of abrasion resistance test, dry cleaning property test and color developability in Examples 25 to 29 | | | | | | | | |
|---|---|---|---|---|---|---|---|---|
| | Pretreatment liquid | Ink | Abrasion resistance test | | Dry clearing property test | Color developability | | |
| | | | Dry | Wet | | Saturation | OD | Whiteness |
| Example 25 | Pretreatment liquid 15-1 (Printing sample 23-1) | Bk3 | 4.5 | 4.5 | 4.5 | - | 1.23 | - |
| | | C3 | 4.5 | 4.5 | 4.5 | 43 | - | - |
| | | M3 | 4.5 | 4.5 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 26 | Pretreatment liquid 15-2 (Printing sample 23-2) | Bk3 | 4.5 | 4.5 | 4.5 | - | 1.23 | - |
| | | C3 | 4.5 | 4.5 | 4.5 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 27 | Pretreatment liquid 15-3 (Printing sample 23-3) | Bk3 | 5.0 | 5.0 | 5.0 | - | 1.23 | - |
| | | C3 | 5.0 | 5.0 | 5.0 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 82 |
| Example 28 | Pretreatment liquid 15-4 (Printing sample 23-4) | Bk3 | 5.0 | 5.0 | 5.0 | - | 1.23 | - |
| | | C3 | 5.0 | 5.0 | 5.0 | 43 | - | - |
| | | M3 | 5.0 | 5.0 | 5.0 | 45 | - | - |
| | | Y3 | 5.0 | 5.0 | 5.0 | 55 | - | - |
| | | W3 | 5.0 | 5.0 | 5.0 | - | - | 80 |
| Example 29 sample | Pretreatment liquid 15-5 (Printing 23-5) | Bk3 | 4.5 | 4.5 | 4.5 | - | 1.2 | - |
| | | C3 | 4.5 | 4.5 | 4.5 | 42 | - | - |
| | | M3 | 5.0 | 4.5 | 5.0 | 43 | - | - |
| | | Y3 | 5.0 | 5.0 | 5.0 | 52 | - | - |
| | | W3 | 5.0 | 5.0 | 5.0 | - | - | 78 |

**Table 8**

| Results of abrasion resistance test, dry cleaning property test and color developability in Comparative examples 6 to 10 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | whiteness |
| Comparative example 6 | Pretreatment liquid 16 (Printing sample 30) | Bk3 | 4.5 | 4.0 | 4.5 | - | 0.51 | - |
| | | C3 | 4.5 | 4.0 | 4.5 | 40 | - | - |
| | | M3 | 4.5 | 4.5 | 4.5 | 41 | - | - |
| | | Y3 | 4.5 | 4.5 | 5.0 | 47 | - | - |
| | | W3 | 4.5 | 4.5 | 5.0 | - | - | 30 |
| Comparative example 7 | Pretreatment liquid 17 (Printing sample 31) | Bk3 | 4.0 | 3.5 | 3.0 | - | 1.12 | - |
| | | C3 | 4.0 | 3.5 | 3.0 | 41 | - | - |
| | | M3 | 5.0 | 4.5 | 3.5 | 45 | - | - |
| | | Y3 | 5.0 | 4.5 | 3.5 | 56 | - | - |
| | | W3 | 4.0 | 4.5 | 4.0 | - | - | 83 |
| Comparative example 8 | Pretreatment liquid 18 (Printing sample 32) | Bk3 | 4.0 | 3.5 | 3.5 | - | 1.09 | - |
| | | C3 | 4.0 | 3.5 | 3.5 | 38 | - | - |
| | | M3 | 4.5 | 4.0 | 4.0 | 39 | - | - |
| | | Y3 | 4.5 | 4.0 | 4.0 | 47 | - | - |
| | | W3 | 4.0 | 4.0 | 4.0 | - | - | 69 |
| Comparative example 9 | Pretreatment liquid 19 (Printing sample 33) | Bk3 | 4.0 | 3.5 | 4.0 | - | 1.08 | - |
| | | C3 | 4.0 | 3.5 | 4.0 | 39 | - | - |
| | | M3 | 4.5 | 4.0 | 4.5 | 42 | - | - |
| | | Y3 | 4.5 | 4.0 | 4.5 | 49 | - | - |
| | | W3 | 4.5 | 4.0 | 4.5 | - | - | 78 |
| Comparative example 10 | Pretreatment liquid 20 (Printing sample 34) | Bk3 | 3.5 | 3.0 | 3.5 | - | 1.02 | - |
| | | C3 | 3.5 | 3.0 | 3.5 | 40 | - | - |
| | | M3 | 4.0 | 3.5 | 4.0 | 42 | - | - |
| | | Y3 | 4.0 | 3.5 | 4.0 | 51 | - | - |
| | | W3 | 4.0 | 3.5 | 4.0 | - | - | 72 |

**Table 9**

| Results of abrasion resistance test, dry cleaning property test and color developability in Example 30 | | | | | | | | |
|---|---|---|---|---|---|---|---|---|
| | Pretreatment liquid | Ink | Abrasion resistance test | | Dry cleaning property test | Color developability | | |
| | | | Dry | Wet | | Saturation | OD | Whiteness |
| Hemp | Pretreatment liquid 11 (Printing sample 24) | Bk3 | 5.0 | 5.0 | 5.0 | - | 1.23 | - |
| | | C3 | 5.0 | 5.0 | 5.0 | 44 | - | - |
| | | M3 | 5.0 | 5.0 | 5.0 | 46 | - | - |
| | | Y3 | 5.0 | 5.0 | 5.0 | 56 | - | - |
| | | W3 | 5.0 | 5.0 | 5.0 | - | - | 82 |
| Rayon fiber | Pretreatment liquid 11 (Printing sample 25) | Bk3 | 5.0 | 4.5 | 5.0 | - | 1.22 | - |
| | | C3 | 5.0 | 4.5 | 5.0 | 43 | - | - |
| | | M3 | 5.0 | 5.0 | 5.0 | 45 | - | - |
| | | Y3 | 5.0 | 5.0 | 5.0 | 53 | - | - |
| | | W3 | 5.0 | 5.0 | 5.0 | - | | 80 |
| Acetate fiber | Pretreatment liquid 11 (Printing sample 26) | Bk3 | 5.0 | 5.0 | 5.0 | - | 1.22 | - |
| | | C3 | 5.0 | 5.0 | 5.0 | 44 | - | - |
| | | M3 | 5.0 | 5.0 | 5.0 | 46 | - | - |
| | | Y3 | 5.0 | 5.0 | 5.0 | 56 | - | - |
| | | W3 | 5.0 | 5.0 | 5.0 | - | - | 81 |
| Silk | Pretreatment liquid 11 (Printing sample 27) | Bk3 | 5.0 | 4.5 | 5.0 | - | 1.22 | - |
| | | C3 | 5.0 | 4.5 | 5.0 | 43 | - | - |
| | | M3 | 5.0 | 5.0 | 5.0 | 43 | - | - |
| | | Y3 | 5.0 | 5.0 | 5.0 | 53 | - | - |
| | | W3 | 5.0 | 4.5 | 5.0 | - | - | 78 |
| Nylon fiber | Pretreatment liquid 11 (Printing sample 28) | Bk3 | 4.5 | 4.5 | 4.5 | - | 1.21 | - |
| | | C3 | 4.5 | 4.5 | 4.5 | 43 | - | - |
| | | M3 | 5.0 | 5.0 | 5.0 | 45 | - | - |
| | | Y3 | 5.0 | 5.0 | 5.0 | 56 | - | - |
| | | W3 | 5.0 | 4.5 | 5.0 | - | - | 78 |
| Polyester fiber | Pretreatment liquid 11 (Printing sample 29) | Bk3 | 4.5 | 4.0 | 4.5 | - | 1.2 | - |
| | | C3 | 4.5 | 4.0 | 4.5 | 43 | - | - |
| | | M3 | 4.5 | 4.5 | 4.5 | 44 | - | - |
| | | Y3 | 4.5 | 4.5 | 4.5 | 54 | - | - |
| | | W3 | 4.5 | 4.5 | 4.5 | - | - | 78 |

## Claims

1. A pretreatment liquid for use on a fabric prior to printing with ink on the fabric, the pretreatment liquid comprising:
water;
polyvalent metal ions; and
first fine polymer particles,
wherein the first fine polymer particles are crosslinkable polyurethane and/or crosslinkable polyurethane-polyurea, the particles having a glass transition temperature of -10°C or lower and a particle diameter as determined by a light scattering method of 30 nm to 5 µm, wherein the first fine polymer particles have a tetrahydrofuran (THF) insoluble portion of 40% by mass or more at 25 °C.

2. The pretreatment liquid according to Claim 1, which is for ink jet textile printing.

3. An ink set comprising an ink and a pretreatment liquid according to any preceding Claim;
wherein the ink includes second fine polymer particleswhich are crosslinkable polyurethane and/or crosslinkable polyurethane-polyurea.

4. The ink set according to Claim 3, which is for use in ink jet textile printing.

5. A textile printing method comprising: applying the pretreatment liquid according to any of Claims 1-2 to a fabric, and subsequently printing on the fabric.

6. A textile printing method comprising: applying the pretreatment liquid comprised in the ink set of Claim 3 to a fabric and subsequently printing on the fabric using the ink of the ink set of Claim 3.

7. The textile printing method according to Claim 5 or Claim 6,
wherein the fabric is cotton, hemp, rayon fibers, acetate fibers, silk, nylon fibers or polyester fibers, or a blended fabric including two or more kinds thereof.

## Patentansprüche

1. Vorbehandlungsflüssigkeit zur Verwendung auf einem Stoff vor dem Drucken mit Tinte auf dem Stoff, wobei die Vorbehandlungsflüssigkeit umfasst:
Wasser;
mehrwertige Metallionen; und
erste Feinpolymerpartikel,
worin die ersten Feinpolymerpartikel vernetzbares Polyurethan und/oder vernetztes Polyurethan-Polyharnstoff sind, die Partikel eine Glasübergangstemperatur von -10°C oder niedriger und einen Partikeldurchmesser, bestimmt mit einem Lichtstreuungsverfahren, von 30 nm bis 5 µm aufweisen, worin die ersten Feinpolymerpartikel 40 Massen% oder mehr eines bei 25°C in Tetrahydrofuran (THF) unlöslichen Teils aufweisen.

2. Vorbehandlungsflüssigkeit gemäß Anspruch 1, die für den Tintenstrahl-Textildruck ist.

3. Tintenset, umfassend eine Tinte und eine Vorbehandlungsflüssigkeit gemäß irgendeinem vorhergehenden Anspruch;
worin die Tinte zweite Feinpolymerpartikel umfasst, die vernetzbares Polyurethan und/oder vernetzbares Polyurethan-Polyharnstoff sind.

4. Tintenset gemäß Anspruch 3, welches zur Verwendung im Tintenstrahl-Textildruck ist.

5. Textildruckverfahren, umfassend: Auftragen der Vorbehandlungsflüssigkeit gemäß irgendeinem der Ansprüche 1 bis 2 auf einen Stoff, und anschließendes Drucken auf dem Stoff.

6. Textildruckverfahren, umfassend: Auftragen der Vorbehandlungsflüssigkeit, die in dem Tintenset von Anspruch 3 enthalten ist, auf einen Stoff und anschließend Drucken auf dem Stoff unter Verwendung der Tinte des Tintensets gemäß Anspruch 3.

7. Textildruckverfahren gemäß Anspruch 5 oder Anspruch 6, worin der Stoff Baumwolle, Hanf, Rayon-Fasern, Acetatfasern, Seide, Nylonfasern oder Polyesterfasern oder ein gemischter Stoff, der zwei oder mehr Arten hiervon umfasst, ist.

## Revendications

1. Liquide de prétraitement destiné à être utilisé sur un tissu avant d'effectuer une impression avec de l'encre sur le tissu, le liquide de prétraitement comprenant :
de l'eau;
des ions métalliques polyvalents ; et
des premières particules fines de polymère,
où les premières particules fines de polymère sont du polyuréthane réticulable et/ou du polyuréthane-polyurée réticulable, les particules ayant une température de transition vitreuse de -10°C ou moins et un diamètre de particule tel que déterminé par un procédé de dispersion de lumière de 30 nm à 5 µm, où les premières particules fines de polymère ont une partie insoluble de tétrahydrofuranne (THF) de 40% en masse ou plus à 25°C.

2. Liquide de prétraitement selon la revendication 1, qui est destiné à l'impression textile par jet d'encre.

3. Jeu d'encres comprenant une encre et un liquide de prétraitement selon l'une des revendications précédentes ;
dans lequel l'encre comporte des deuxièmes particules fines de polymère qui sont du polyuréthane réticulable et/ou du polyuréthane-polyurée réticulable.

4. Jeu d'encres selon la revendication 3, qui est destiné à être utilisé dans l'impression textile par jet d'encre.

5. Procédé d'impression textile comprenant :
l'application du liquide de prétraitement selon l'une des revendications 1 à 2 à un tissu, et ensuite l'impression sur le tissu.

6. Procédé d'impression textile comprenant :
l'application du liquide de prétraitement, compris dans le jeu d'encres de la revendication 3, à un tissu et ensuite l'impression sur le tissu en utilisant l'encre du jeu d'encres de la revendication 3.

7. Procédé d'impression textile selon la revendication 5 ou 6,
dans lequel le tissu est du coton, du chanvre, des fibres de rayonne, des fibres d'acétate, de la soie, des fibres de nylon ou des fibres de polyester ou un tissu mélangé comportant deux ou plusieurs types de ceux-ci.
